(19) **Europäisches Patentamt / European Patent Office / Office européen des brevets**

(11) **EP 4 782 498 A1**

(12) **EUROPEAN PATENT APPLICATION**
published in accordance with Art. 153(4) EPC

(43) Date of publication:
29.07.2026 Bulletin 2026/31

(21) Application number: 24868279.1

(22) Date of filing: 18.09.2024

(51) International Patent Classification (IPC):
*C08L 29/04* (2006.01)    *B32B 27/28* (2006.01)
*C08K 3/11* (2018.01)    *C08K 3/105* (2018.01)
*C08K 5/09* (2006.01)

(52) Cooperative Patent Classification (CPC):
**B32B 27/28; C08K 3/105; C08K 3/11; C08K 5/09; C08L 29/04**

(86) International application number:
**PCT/JP2024/033302**

(87) International publication number:
**WO 2025/063202 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 19.09.2023 JP 2023151675
19.09.2023 JP 2023151681
19.09.2023 JP 2023151682
19.09.2023 JP 2023151683

(71) Applicant: **Mitsubishi Chemical Corporation**
**Tokyo 100-8251 (JP)**

(72) Inventors:
- **YAMAMOTO, Nobuyuki**
**Tokyo 100-8251 (JP)**
- **TOMITA, Yuuko**
**Tokyo 100-8251 (JP)**
- **AOYAMA, Masato**
**Tokyo 100-8251 (JP)**

(74) Representative: **Hoffmann Eitle**
**Patent- und Rechtsanwälte PartmbB**
**Arabellastraße 30**
**81925 München (DE)**

(54) **RESIN COMPOSITION, MOLDING MATERIAL, MULTILAYER STRUCTURE, MOLDED BODY, FOOD PACKAGE, AND METHODS FOR PRODUCING RESIN COMPOSITION AND MULTILAYER STRUCTURE**

(57) A resin composition containing a polyvinyl alcohol resin, a titanium compound, and a compound (X), wherein the polyvinyl alcohol resin is an ethylene-modified polyvinyl alcohol resin containing from 1 to 19 mol% of an ethylene structural unit, the compound (X) is at least one selected from the group consisting of an alkaline earth metal compound (A), an alkaline metal compound (B), sorbic acid (C), and acetic acid (D), and a content of the titanium compound in terms of metal is from 0.0001 to 2 ppm relative to a mass of the resin composition is provided as the resin composition having excellent thermal stability.

EP 4 782 498 A1

**Description**

Technical Field

The present disclosure relates to a resin composition containing a polyvinyl alcohol resin, a molding material, a multilayer structure, and methods for producing a resin composition and a multilayer structure.

Background Art

Polyvinyl alcohol resins (hereinafter sometimes referred to as "PVA resins") are widely used as coating agents for paper, modifiers for paper such as internal additives for paper, adhesives for paper, wood, inorganic substances, and the like, stabilizers for emulsion polymerization and suspension polymerization, optical films, and the like, because they have excellent film-forming properties, transparency, strength characteristics, and surface activity as few crystalline water-soluble polymers.

However, since PVA resins generally have issues in thermal stability, such as their melting point and thermal decomposition temperature being very close to each other, it is difficult to perform hot melt-molding, and PVA resins have been used in the state of an aqueous solution.

In order to improve thermal stability, for example, Patent Document 1 proposes an ethylene-modified PVA resin having a specific degree of polymerization and a specific degree of saponification, having predetermined amounts of carboxy groups and lactone rings, and containing from 2 to 19 mol% of an ethylene structural unit.

In addition, Patent Document 2 proposes a PVA resin having a viscosity average degree of polymerization of a specific quantity or more and containing a titanium compound in an amount of from 5 to 500 ppm relative to the PVA polymer, in order to improve moisture heat resistance.

In addition, Patent Document 3 proposes a PVA polymer film containing at least one metal element selected from the group consisting of transition metals and aluminum, in order to achieve a PVA polymer film which has excellent slip properties, suppresses occurrence of wrinkles even in a film roll wound in a long length, is less likely to be colored, and has excellent transparency.

In addition, in order to improve thermal stability, for example, Patent Document 4 proposes a modified ethylene-vinyl alcohol-based resin composition containing: a modified ethylene-vinyl alcohol-based resin having from 1 to 16.5 mol% of a primary hydroxyl group structural unit in its side chain; and from 0.1 to 500 ppm of a conjugated polyene.

Citation List

Patent Literature

Patent Document 1: JP 2000-309607 A
Patent Document 2: JP H05-222609 A
Patent Document 3: WO 2013/146533
Patent Document 4: JP 2023-077420 A

Summary

Technical Problem

According to studies of the present inventors, the technique disclosed in Patent Document 1 has a certain effect on thermal stability, but the thermal stability is still insufficient, and there is room for improvement thereof.

In addition, in the technique disclosed in Patent Document 2, the moisture heat resistance is improved by incorporating from 5 to 500 ppm of titanium in the PVA resin, but when the amount of titanium is less than 5 ppm, a crosslinking effect is low, and high moisture heat resistance cannot be achieved.

In addition, the technique disclosed in Patent Document 3 uses an unmodified PVA resin and further contains a titanium compound, but the thermal stability is still insufficient, and there is room for improvement thereof.

Further, according to studies of the present inventors, the technique disclosed in Patent Document 4 has a certain effect on thermal stability, but the thermal stability is still insufficient, and there is room for improvement thereof.

Under such a background, the present disclosure provides a resin composition having excellent thermal stability.

Solution to Problem

However, as a result of intensive studies in view of such circumstances, the present inventors have found that a resin composition having excellent thermal stability can be produced by incorporating a trace amount of a titanium compound and a specific compound (X) in an ethylene-modified PVA resin.

That is, the present disclosure provides the following aspects.

[1] A resin composition containing:

a PVA resin;
a titanium compound; and
a compound (X),
wherein the PVA resin is an ethylene-modified PVA resin containing from 1 to 19 mol% of an ethylene structural unit,
wherein the compound (X) is at least one selected from the group consisting of an alkaline earth metal compound (A), an alkaline metal compound (B), sorbic acid (C), and acetic acid (D), and
wherein a content of the titanium compound in terms of metal is from 0.0001 to 2 ppm relative to a mass of the resin composition.

[2] The resin composition according to [1], wherein the compound (X) is an alkaline earth metal compound (A).
[3] The resin composition according to [2], wherein a content of the alkaline earth metal compound (A) in terms of metal is from 0.0001 to 1 ppm relative to the mass of the resin composition.
[4] The resin composition according to [2] or [3], wherein the alkaline earth metal compound (A) is a magnesium compound.
[5] The resin composition according to any one of [1] to [4], wherein the compound (X) is an alkaline metal compound (B).
[6] The resin composition according to [5], wherein a content of the alkaline metal compound (B) in terms of metal is from 0.0001 to 5000 ppm relative to the mass of the resin composition.
[7] The resin composition according to [5] or [6], wherein the alkaline metal compound (B) is a sodium compound.
[8] The resin composition according to any one of [1] to [7], wherein the compound (X) is sorbic acid (C).
[9] The resin composition according to [8], wherein a content of the sorbic acid (C) is from 0.005 to 100 ppm relative to the mass of the resin composition.
[10] The resin composition according to any one of [1] to [9], wherein the compound (X) is acetic acid (D).
[11] The resin composition according to [10], wherein a content of the acetic acid (D) is from 10 to 10000 ppm relative to the mass of the resin composition.
[12] The resin composition according to any one of [1] to [11], wherein the content of the titanium compound in terms of metal is 0.0001 ppm or more and less than 1 ppm relative to the mass of the resin composition.
[13] A molding material containing the resin composition according to any one of [1] to [12].
[14] A multilayer structure including a layer containing the resin composition according to any one of [1] to [12].
[15] A molded body including the multilayer structure according to [14].
[16] A food package including the multilayer structure according to [14].
[17] A method for producing the resin composition according to any one of [1] to [12], the method including:
melt-mixing a resin composition raw material containing the PVA resin and the titanium compound.
[18] A method for producing the multilayer structure according to [14], the method including:
melt-molding a layer containing the resin composition.

Advantageous Effects of Invention

The resin composition of the present disclosure is excellent in thermal stability. A molding material, a molded body, and a food package each containing the resin composition of the present disclosure, and a multilayer structure having a layer containing the resin composition of the present disclosure are also excellent in thermal stability.

Description of Embodiments

The present disclosure will be described below with reference to embodiments for carrying out the present disclosure. However, the present disclosure is not limited to the embodiments described below.

In the present specification, "x and/or y (x and y are any structures or components)" means three combinations of only x, only y, and x and y.

The meaning of the expression "X to Y" (X and Y are any numerals) includes "X or more and Y or less" and "preferably more than X" or "preferably less than Y" unless otherwise specified.

When the expression "X or more" (X is any numeral) or "Y or less" (Y is any numeral) is used, the expression also includes the meaning of "preferably more than X" or "preferably less than Y".

As used herein, for the numerical ranges described in stages, an upper limit value or a lower limit value of a numerical range of a certain stage can be freely combined with an upper limit value or a lower limit value of a numerical range of another stage. In addition, in a numerical range described herein, the upper limit value or the lower limit value of the numerical range can be replaced by a value shown in the Examples.

In the present specification, the meaning of the term "layer" also includes a relatively thin layer such as a "film", a "tape", or a "sheet" in addition to a thick layer.

A resin composition according to an embodiment of the present disclosure (hereinafter sometimes referred to as "the present resin composition") contains a PVA resin as a main component, and contains a specific trace amount of a titanium compound and a compound (X), and the compound (X) contains at least one selected from the group consisting of an alkaline earth metal compound (A), an alkaline metal compound (B), sorbic acid (C), and acetic acid (D).

That is, in the present resin composition, the base resin is a PVA resin, and the content of the PVA resin in the present resin composition is usually 70 mass% or more, preferably 80 mass% or more, more preferably 90 mass% or more, and still more preferably 95 mass% or more.

The case where the compound (X) of the present resin composition contains the alkaline earth metal compound (A) is referred to as a "first aspect", the case where the compound (X) of the present resin composition contains the alkaline metal compound (B) is referred to as a "second aspect", the case where the compound (X) of the present resin composition contains the sorbic acid (C) is referred to as a "third aspect", and the case where the compound (X) of the present resin composition contains the acetic acid (D) is referred to as a "fourth aspect", and the aspects are described in this order.

First Aspect

The first aspect includes the following aspects <I-1> to <I-10>.

<I-1> A resin composition containing:

a PVA resin;
a titanium compound; and
an alkaline earth metal compound (A),
wherein
the PVA resin is an ethylene-modified PVA resin containing from 1 to 19 mol% of an ethylene structural unit, and
a content of the titanium compound in terms of metal is from 0.0001 to 2 ppm relative to a mass of the resin composition.

<I-2> The resin composition according to <I-1>, wherein a content of the alkaline earth metal compound (A) in terms of metal is from 0.0001 to 1 ppm relative to the mass of the resin composition.

<I-3> The resin composition according to <I-1> or <I-2>, wherein the alkaline earth metal compound (A) is a magnesium compound.

<I-4> The resin composition according to any one of <I-1> to <I-3>, wherein the content of the titanium compound in terms of metal is 0.0001 ppm or more and less than 1 ppm relative to the mass of the resin composition.

<I-5> A molding material containing the resin composition described in any one of <I-1> to <I-4>.

<I-6> A multilayer structure including a layer containing the resin composition described in any one of <I-1> to <I-4>.

<I-7> A molded body including the multilayer structure described in <I-6>.

<I-8> A food package including the multilayer structure described in <I-6>.

<I-9> A method for producing the resin composition described in any one of <I-1> to <I-4>, the method including: melt-mixing a resin composition raw material containing the PVA resin and the titanium compound.

<I-10> A method for producing the multilayer structure described in <I-6>, the method including: melt-molding a layer containing the resin composition.

The present disclosure will be described below with reference to embodiments for carrying out the first aspect. However, the present disclosure is not limited to the embodiments described below.

Resin Composition

The resin composition according to the first aspect of the present disclosure (hereinafter, sometimes referred to as "the present resin composition (1)") contains a PVA resin as a main component, and contains a specific trace amount of a titanium compound and an alkaline earth metal compound (A).

That is, in the present resin composition (1), the base resin is a PVA resin, and the content of the PVA resin in the present resin composition (1) is usually 70 mass% or more, preferably 80 mass% or more, more preferably 90 mass% or more, and still more preferably 95 mass% or more.

Hereinafter, the respective components will be described.

PVA Resin

The PVA resin used in the present embodiment is an ethylene-modified PVA resin having an ethylene structural unit, and is usually produced by copolymerizing a vinyl ester-based monomer and ethylene in the presence of a polymerization initiator and saponifying the copolymer.

Examples of the vinyl ester-based monomer include vinyl formate, vinyl acetate, vinyl propionate, vinyl valerate, vinyl caprate, vinyl laurate, vinyl stearate, vinyl benzoate, vinyl pivalate, and vinyl versatate, and among these, vinyl acetate is preferable from the viewpoint of producing a PVA resin. One of these may be used alone, or two or more these may be used in combination. Furthermore, a copolymer of one or more vinyl ester-based monomers and another monomer copolymerizable therewith may be used. As the other monomer copolymerizable with these vinyl ester-based monomers, typically known monomers can be used. The content of the structural unit derived from the other copolymerizable monomer is usually preferably 15 mol% or less, more preferably 10 mol% or less, and still more preferably 5 mol% or less relative to the PVA resin, and the structural unit derived from the other copolymerizable monomer need not be contained.

As a polymerization method of copolymerizing the ethylene and the vinyl ester-based monomer in the presence of a polymerization initiator, any known polymerization method such as bulk polymerization, solution polymerization, suspension polymerization, or emulsion polymerization can be used, but the copolymerization is usually performed by a bulk polymerization method or a solution polymerization method in which the polymerization is performed in the absence of a solvent or in a solvent such as an alcohol.

Examples of the alcohol used as the solvent in the solution polymerization include lower alcohols such as methanol, ethanol, and propanol. One of these may be used alone, or two or more these may be used in combination.

Examples of the polymerization initiator include known initiators such as azo-based initiators and peroxide-based initiators, for example, 2,2'-azobisisobutyronitrile, 2,2'-azobis(2,4-dimethyl-valeronitrile), benzoyl peroxide, and n-propyl peroxydicarbonate. The polymerization reaction temperature is selected from a range of from 0 to 150°C. One of these may be used alone, or two or more these may be used in combination.

The saponification can be carried out by a known method, and is usually carried out by dissolving the produced copolymer in an alcohol or dimethyl sulfoxide in the presence of a saponification catalyst. Examples of the saponification solvent include methanol, methyl acetate, dimethyl sulfoxide, and dimethyl formamide. One of these may be used alone, or two or more these may be used in combination.

As the saponification catalyst, for example, an alkaline substance such as potassium hydroxide or sodium hydroxide can be used. One of these may be used alone, or two or more these may be used in combination.

The degree of saponification of the PVA resin is usually from 90 to 99.99 mol%, preferably from 95 to 99.5 mol%, and more preferably from 97 to 99 mol%. When the degree of saponification is equal to or higher than the lower limit value, gas barrier properties, thermal stability, moisture resistance, and the like tend to be more excellent. On the other hand, when the degree of saponification is equal to or lower than the upper limit value, the PVA resin tends to be less likely to be thermally degraded.

The degree of saponification of the PVA resin can be measured based on JIS K6726.

The content of the ethylene structural unit in the PVA resins is usually from 1 to 19 mol%, preferably from 2 to 15 mol%, and more preferably from 3 to 10 mol%. When the content of the ethylene structural unit is equal to or higher than the lower limit value, the gas barrier properties and the thermal stability tend to be excellent. On the other hand, when the content of the ethylene structural unit is equal to or lower than the upper limit value, the gas barrier properties under high humidity and melt-moldability tend to be excellent.

The content of the ethylene structural unit in the PVA resin was determined from proton NMR of a polyvinyl ester containing an ethylene structural unit, which is a precursor of the PVA resin. That is, the produced polyvinyl ester was sufficiently reprecipitated and purified three times or more with n-hexane/acetone, and then dried under reduced pressure at 80°C for 3 days to prepare a polyvinyl ester for analysis. The polyvinyl ester was dissolved in DMSO-D and measured at 80°C using 500 MHz proton NMR (JEOLGX-500). The content of the ethylene structural unit can be calculated using signals (from 4.7 to 5.2 ppm) derived from the main chain methine of the vinyl ester and signals (from 0.8 to 1.6 ppm) derived from the main chain methylene of the ethylene, the vinyl ester, and the third component.

The melting point of the PVA resin is usually from 100 to 270°C, preferably from 120 to 250°C, and more preferably from 150 to 230°C. When the melting point is equal to or higher than the lower limit value, heat resistance tends to be excellent. On the other hand, when the melting point is equal to or lower than the upper limit value, the PVA resin tends to be less likely to be thermally degraded.

Titanium Compound

Examples of the titanium compound used in the present embodiment include inorganic titanium compounds and organic titanium compounds. One of the titanium compounds may be used alone, or two or more thereof may be used in combination. Among these, an inorganic titanium compound is preferable.

Examples of the inorganic titanium compound include titanium oxides, titanium hydroxides, titanium chlorides, and inorganic salts of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide.

Examples of the titanium chloride include titanium(III) chloride and titanium(IV) chloride.

The inorganic salt of titanium excludes the titanium chloride, and examples thereof include titanium phosphate and titanium sulfate.

Among these, titanium oxides are preferable, titanium(IV) oxide is more preferable, rutile-type titanium(IV) oxide is particularly preferable.

Examples of the organic titanium compound include titanium carboxylates such as titanium acetate, titanium butyrate, and titanium stearate.

The titanium compound may be present as a titanium compound in the PVA resin composition, or may be present in an ionized state or in a complex state in which the titanium compound interacts with the PVA resin or another ligand.

The average particle size of the titanium compound is usually from 0.001 to 100 $\mu$m, preferably from 0.01 to 50 $\mu$m, more preferably from 0.015 to 20 $\mu$m. When the average particle size of the titanium compound is within the above range, the thermal stability effect tends to be further improved. The average particle size referred to herein is a median diameter.

The content of the titanium compound in terms of metal is from 0.0001 to 2 ppm, preferably from 0.001 to 1 ppm, more preferably 0.001 ppm or more and less than 1 ppm, and still more preferably from 0.01 to 0.5 ppm, relative to the mass of the resin composition. When the content of the titanium compound is equal to or higher than the lower limit value, an effect of suppressing thermal degradation tends to be excellent, and when the content is equal to or lower than the upper limit value, the thermal decomposition of the PVA resin is less likely to occur, and the PVA resin tends to be less likely to be colored.

The content of the titanium compound in terms of metal can be determined by weighing the present resin composition (1) in a platinum crucible, sequentially ashing the present resin composition (1) with a burner and an electric furnace, thermally decomposing the ashed product with nitric acid and hydrofluoric acid, treating the decomposed product with a mixed acid of dilute nitric acid and dilute hydrofluoric acid, making the treated product into a constant volume to prepare a constant volume liquid, and measuring the titanium in the constant volume liquid by ICP mass spectrometry using an ICP mass spectrometer (Agilent 8800, available from Agilent Technologies).

It is presumed that the thermal decomposition of the PVA resin is caused by the formation of a polyene structure in the main chain under alkaline conditions or by a dehydration reaction starting from an OH group in the PVA resin. In the present resin composition (1), titanium in the titanium compound is stabilized as a tetravalent ion, and therefore, when a polyene structure is formed in the main chain of the PVA resin, titanium is coordinated to a double bond of the polyene structure to form a chelate, whereby the PVA resin is stabilized. It is presumed that even a trace amount of the titanium compound suppresses further formation of the polyene structure.

Alkaline Earth Metal Compound (A)

Examples of the alkaline earth metal compound (A) used in the present embodiment include salts and oxides of alkaline earth metals. One of these may be used alone, or two or more of these may be used in combination. Among these, from the viewpoint of economic efficiency and dispersibility, alkaline earth metal salts and alkaline earth metal oxides are preferred, and alkaline earth metal oxides are particularly preferred.

Examples of the alkaline earth metal salt include inorganic salts of alkaline earth metals, and carboxylates of alkaline earth metals.

Examples of the inorganic salts of alkaline earth metals include carbonates, hydrogen carbonates, phosphates, borates, sulfates, and chlorides of alkaline earth metals.

Examples of the carboxylates of alkaline earth metals include saturated or unsaturated carboxylates having from 2 to 25, preferably from 2 to 22, and more preferably from 6 to 20 carbons, and specific examples thereof include monovalent carboxylates such as acetate, butyrate, propionate, enanthate, caprate, laurate, palmitate, stearate, 12-hydroxystearate, behenate, and montanate, and divalent carboxylates such as oxalate, malonate, succinate, adipate, suberate, and sebacate. Among these, from the viewpoint of commercial availability, a linear saturated carboxylate is preferred and a monovalent carboxylate is more preferred.

Examples of alkaline earth metal species of the alkaline earth metal compound (A) include beryllium, magnesium, calcium, strontium, barium, and radium. Among them, from the viewpoint of commercial availability and economic efficiency, magnesium and calcium are preferred, and magnesium is particularly preferred.

Among these, magnesium oxide is preferable as the alkaline earth metal compound (A). In addition, from the viewpoint of economic efficiency and dispersibility, the alkaline earth metal compound (A) preferably excludes a layered inorganic compound such as montmorillonite and a double salt such as hydrotalcite.

The alkaline earth metal compound (A) can be used in any form such as a solid (e.g., powder, fine powder, or flakes), a semisolid, a liquid, a paste, a solution, or an emulsion (aqueous dispersion). The alkaline earth metal compound (A) is preferably in the form of a powder, among these forms.

For the alkaline earth metal compound (A), one can be used alone, or two or more can be used in combination. When a plurality of kinds of alkaline earth metal compounds are used, the content thereof is a total content of the plurality of kinds of alkaline earth metal compounds in terms of metal (mass).

The content of the alkaline earth metal compound (A) in terms of metal is usually from 0.0001 to 1 ppm, preferably from 0.001 to 0.8 ppm, and more preferably from 0.01 to 0.5 ppm, relative to the mass of the resin composition.

The content of the alkaline earth metal in terms of metal is, namely, a content of an alkaline earth metal element.

When the content of the alkaline earth metal compound (A) in terms of metal is equal to or lower than the upper limit value, the thermal stability tends to be excellent, and when the content is equal to or higher than the lower limit value, moldability of the resin composition tends to be excellent.

The content of the alkaline earth metal compound (A) in terms of metal can be measured by an atomic absorption spectrophotometer using a test solution prepared by adding pure water to a solution prepared by subjecting a heated and ashed product of the present resin composition (1) to an acid treatment with hydrochloric acid or the like to make the volume constant.

The mass ratio of the content of the alkaline earth metal compound (A) in terms of metal to the content of the titanium compound in terms of metal is usually from 0.01 to 5000, preferably from 0.05 to 500, and more preferably from 0.1 to 10. When the mass ratio is equal to or lower than the upper limit value, the thermal stability tends to be excellent, and when the mass ratio is equal to or higher than the lower limit value, coloration of the molded body tends to be capable of being suppressed.

Although the reason why an excellent effect is achieved by using the alkaline earth metal compound (A) used in the present embodiment and the titanium compound in combination is not clear, probably, an interaction product (complex, alloy, or the like) is formed by using the titanium compound and the alkaline earth metal compound (A) in specific amounts in combination, and the interaction product further interacts with oxygen of an OH group present in the PVA resin, thereby suppressing formation of a polyene structure. As a result, it is presumed that the thermal stability is improved.

Additional Thermoplastic Resin

The present resin composition (1) can contain a thermoplastic resin other than the PVA resin within a range in which the effects of the present disclosure are not impaired (e.g., usually 30 mass% or less, preferably 20 mass% or less, and more preferably 10 mass% or less of the present resin composition (1), and the lower limit value is usually 0 mass%).

As the additional thermoplastic resin, a known thermoplastic resin can be used, and examples thereof include a polyester-based resin, a polystyrene-based resin, a polyvinylchloride-based resin, a polycarbonate-based resin, an ionomer, polyvinylidene chloride, a polyester elastomer, a polyurethane elastomer, chlorinated polyethylene, and chlorinated polypropylene. One of these may be used alone or two or more of these may be used in combination.

Additional Compounding Agent

The present resin composition (1) may contain a compounding agent (however, excluding the titanium compound and the alkaline earth metal compound (A)) that is generally blended in the PVA resin within a range in which the effects of the present disclosure are not impaired (for example, usually 30 mass% or less, preferably 20 mass% or less, and more preferably 10 mass% or less of the present resin composition (1), and the lower limit value thereof is usually 0 mass%). Examples of the compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxyl group-containing phenolic aldehyde resins, a terpene compound, a blended material of a tertiary hydrogen-containing resin and a transition metal (for example, combination of polypropylene and cobalt), a blended material of a carbon-carbon unsaturated bond-containing resin and a transition metal (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a colorant, an antistatic agent, a surfactant (however, excluding those used as a lubricant), an antimicrobial agent, an anti-blocking agent, and a filler (for example, an inorganic filler). One of these compounds may be used alone or two or more thereof may be used in combination.

Method for Producing Resin Composition

The present resin composition (1) can be produced by mixing the PVA resin, the titanium compound, and the alkaline earth metal compound (A) by a known method, for example, a dry blending method, a melt-mixing method, a solution mixing method, an impregnation method, or the like, and, among these methods, the present resin composition (1) is preferably produced by incorporating a step of melt-mixing a resin composition raw material containing the PVA resin and the titanium compound. Furthermore, these manufacturing methods can be optionally combined.

Examples of the dry blending method include (i) a method of dry-blending a pellet-shaped PVA resin, an alkaline earth metal compound (A) and a titanium compound using a tumbler or the like.

Examples of the melt-mixing method include (ii) a method of dry-blending a pellet-shaped PVA resin, an alkaline earth metal compound (A) and a titanium compound and melt-kneading the resulting dry blend, and (iii) a method of adding an alkaline earth metal compound (A) and a titanium compound to a molten PVA resin and melt-kneading the resulting mixture.

Examples of the solution mixing method include (iv) a method of preparing a solution using a commercially available PVA resin, blending an alkaline earth metal compound (A) and a titanium compound therein, performing solidification molding, then performing solid-liquid separation with a known means, and drying the resulting product; and (v) a method of, in the process of producing a PVA resin, incorporating an alkaline earth metal compound (A) and a titanium compound in an ethylene-vinyl ester-based copolymer solution before saponification or a uniform solution of a PVA resin (water/alcohol solution or the like), performing solidification molding, then performing solid-liquid separation with a known means, and drying the resulting product.

Examples of the impregnation method include (vi) a method of bringing a pellet-shaped PVA resin into contact with an aqueous solution containing an alkaline earth metal compound (A) and a titanium compound, incorporating the alkaline earth metal compound (A) and the titanium compound in the PVA resin, and then drying the PVA resin.

As the aqueous solution containing a titanium compound, an aqueous solution of a titanium compound or an aqueous solution prepared by immersing a titanium compound in water containing various chemicals to elute titanium ions can be used.

In the impregnation method, the contents of the alkaline earth metal compound (A) and the titanium compound (in terms of metal) can be controlled with the concentrations of the alkaline earth metal compound (A) and the titanium compound in the aqueous solution in which the PVA resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present disclosure, the different methods described above can be combined. Among those, from the viewpoint of productivity and producing a resin composition that exhibits more significant effects of the present disclosure, a melt-mixing method is preferable, and the method (ii) is particularly preferable. In a case where the additional thermoplastic resin and an additional compounding agent are used, they are blended by a common process according to the aforementioned manufacturing method.

The present resin composition (1) produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, oval pellets have a minor axis length of usually from 1 to 10 mm, preferably from 2 to 6 mm, and more preferably from 2.5 to 5.5 mm, and a major axis length of usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-shaped PVA resin used in each of the production methods are preferably the same.

The moisture content of the present resin composition (1) is usually from 0.01 to 0.5 mass%, preferably from 0.05 to 0.35 mass%, and more preferably from 0.1 to 0.3 mass%.

The moisture content of the present resin composition (1) is measured and calculated by the following method.

The mass ($W_1$) of the present resin composition (1) before drying is weighed with an electronic balance, the resin composition is dried in a hot air dryer at 150°C for 5 hours and then cooled in a desiccator for 30 minutes, and then the mass ($W_2$) after cooling is weighed. The moisture content is calculated from the following equation.

$$\text{Moisture content (mass\%)} = [(W_1 - W_2)/W_1] \times 100$$

When the present resin composition (1) is in the form of pellets, preferably, a known lubricant is adhered to the surface of the pellets from the viewpoint of stabilizing the feed properties during melt-molding. Examples of the type of lubricant include higher fatty acids having 12 or more carbons (e.g., lauric acid, myristic acid, palmitic acid, stearic acid, behenic acid, and oleic acid), higher fatty acid esters (such as methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. One of these compounds may be used alone or two or more thereof may be used in combination. The content of the lubricant is usually 5 mass% or less and preferably 1 mass% or less of the present resin composition (1). Note that the lower limit is usually 0 mass%.

The present resin composition (1) thus produced can suppress thermal degradation at the time of heating, and the 5 mass% loss temperature of the present resin composition (1) is usually higher than 350°C, and preferably 351°C or higher.

The upper limit of the 5 mass% loss temperature is preferably as high as possible, but is usually 550°C.

A difference of 1°C in the mass loss temperature appears as a large difference in yield in actual production, and thus the difference is very large.

The "5 mass% loss temperature" can be measured using a thermogravimetric analyzer, and for example, can be measured by a method described in Examples below.

The present resin composition (1) thus produced is prepared into various forms such as a pellet, a powder form, or a liquid form, and is provided as a molding material for various molded bodies. In particular, in the present disclosure, when the composition is provided as a material for melt-molding, the effect of the present disclosure tends to be achieved more efficiently, which is preferable.

The present resin composition (1) also includes a resin composition produced by mixing resins other than the PVA resin used in the present resin composition (1).

Examples of the molded material include a monolayer film molded from the present resin composition (1) and a multilayer structure having at least one layer containing the present resin composition (1).

Multilayer Structure

A multilayer structure according to the first aspect of the present disclosure (hereinafter, referred to as "the present multilayer structure (1)") has a layer containing the present resin composition (1). When the layer containing the present resin composition (1) (hereinafter referred to simply as "the present resin composition layer (1)") is laminated with an additional substrate containing a thermoplastic resin other than the present resin composition (1) as a main component (hereinafter, the resin used for the substrate may be abbreviated as "substrate resin"), strength can be further imparted, the present resin composition layer (1) can be protected from the influence of moisture or the like, and other functions can be imparted.

Examples of the substrate resin include polyethylene-based resins such as linear low-density polyethylene, low-density polyethylene, ultra-low-density polyethylene, medium-density polyethylene, high-density polyethylene, ethylene-propylene (block and random) copolymers, and ethylene-$\alpha$-olefin (an $\alpha$-olefin having from 4 to 20 carbons) copolymers; polypropylene-based resins such as polypropylene and propylene-$\alpha$-olefin (an $\alpha$-olefin having from 4 to 20 carbons) copolymers; polyolefin-based resins in a broad sense including (unmodified) polyolefin-based resins such as polybutene, polypentene, and polycyclic olefin-based resins (polymers having a cyclic olefin structure in at least one of the main chain and a side chain), and modified olefin resins such as unsaturated carboxylic acid-modified polyolefin-based resins in which any of these polyolefins is graft-modified with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene-based resins; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. One of these may be used alone or two or more of these may be used in combination.

The terms "linear low-density polyethylene", "low-density polyethylene", "ultra-low-density polyethylene", "medium-density polyethylene", and "high-density polyethylene" are commonly used to represent the types of polyethylene.

Among these, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present resin composition layers (1) are denoted by a (a1, a2, ...) and the substrate resin layers are denoted by b (b1, b2, ...), the layer configuration of the present multilayer structure (1) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present resin composition (1) and a thermoplastic resin other than the present resin composition (1), which is produced by remelt-molding an end, a defective product, or the like generated in the process of producing the present multilayer structure (1), is denoted by R, the layer configuration can also be b/R/a, b/R/a/b, b/R/a/R/b, b/a/R/a/b, b/R/a/R/a/R/b, or the like. The number of layers of the present multilayer structure (1) in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Representative examples of the adhesive resin include carboxy group-containing modified polyolefin-based polymers produced by chemically bonding an unsaturated carboxylic acid or an anhydride thereof to a polyolefin-based resin by an addition reaction, a graft reaction, or the like. Examples of the carboxy group-containing modified polyolefin-based polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One of these may be used alone, or two or more of these may be used in combination.

In the present multilayer structure (1), in the case of using adhesive resin layers between the present resin composition layer (1) and the substrate resin layer, an adhesive resin having excellent hydrophobicity is preferably used because the adhesive resin layers are located on both sides of the present resin composition layer (1).

The substrate resin or the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the spirit of the present disclosure is not impeded (for example, 30 mass% or less, and preferably 10 mass% or less, with respect to the entire resin). One of these may be used alone or two or more of these may be used in combination.

The present resin composition layer (1) and the substrate resin layer can be laminated (including the case of interposing an adhesive resin layer) by a known method. Examples thereof include a method of melt-extrusion laminating the substrate resin to a film, a sheet, or the like of the present resin composition (1), a method of melt-extrusion laminating the present resin composition (1) to the substrate resin layer, a method of co-extruding the present resin composition (1) and the substrate resin, a method of dry laminating the present resin composition (1) (the present resin composition layer (1)) and the substrate resin (substrate resin layer) using a known adhesive such as an organic titanium compound, an isocyanate compound, a polyester-based compound, or a polyurethane compound, and a method of applying a solution of the present resin composition (1) onto the substrate resin and then removing the solvent. Among these, from the viewpoints of cost and the environment, manufacturing is preferably performed by melt-molding the present resin composition layer (1), and specifically by a co-extrusion method.

The present multilayer structure (1) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is equal to or higher than the lower limit value, stretchability tends to be excellent, and when the stretching temperature is equal to or lower than the upper limit value, a stable stretched state tends to be capable of being maintained.

The present multilayer structure (1) after the stretching treatment may be subjected to heat setting for the purpose of imparting dimensional stability. The heat setting can be carried out by a well-known means; for example, the stretch-treated present multilayer structure (1) is heat-treated usually at a temperature of from 80 to 180°C and preferably at a temperature of from 100 to 165°C usually for about from 2 to 600 seconds while the stretch-treated present multilayer structure (1) is kept in a state of tension.

In the case of using the stretch-treated present multilayer structure (1) as a shrink film, in order to impart heat shrinkability, the stretch-treated present multilayer structure (1) is not subjected to the heat setting described above, but subjected to a treatment such as application of cool air to the present multilayer structure after the stretching treatment to cool-set the structure.

The thickness of the present multilayer structure (1) (including a stretched multilayer structure), and the thicknesses of the present resin composition layer (1), the substrate resin layer, and the adhesive resin layer constituting the multilayer structure cannot be generally defined due to the layer configuration, the type of the substrate resin, the type of the adhesive resin, the application, the packaging form, the required physical properties, and the like, but the thickness of the present multilayer structure (1) (including a stretched multilayer structure) is usually from 10 to 5000 $\mu$m, preferably from 30 to 3000 $\mu$m, and more preferably from 50 to 2000 $\mu$m. The thickness of the present resin composition layer (1) is usually from 1 to 500 $\mu$m, preferably from 3 to 300 $\mu$m, and more preferably from 5 to 200 $\mu$m, the thickness of the substrate resin layer is usually from 5 to 3000 $\mu$m, preferably from 10 to 2000 $\mu$m, and more preferably from 20 to 1000 $\mu$m, and the thickness of the adhesive resin layer is usually from 0.5 to 250 $\mu$m, preferably from 1 to 150 $\mu$m, and more preferably from 3 to 100 $\mu$m.

Furthermore, the ratio of the thickness of the present resin composition layer (1) to the thickness of the substrate resin layer ((the present resin composition layer (1))/(substrate resin layer)) in the present multilayer structure (1) is usually from 1/99 to 50/50, preferably from 5/95 to 45/55, and more preferably from 10/90 to 40/60, with the proviso that, when at least one type of layer has a plurality of layers, the ratio is based on the thickness of the thickest corresponding layer. The thickness ratio of the present resin composition layer (1) to the adhesive resin layer (the present resin composition layer (1)/the adhesive resin layer) in the present multilayer structure (1) is usually from 10/90 to 99/1, preferably from 20/80 to 95/5, and more preferably from 50/50 to 90/10, with the proviso that, when at least one type of layer has a plurality of layers, the ratio is based on the thickness of the thickest corresponding layer.

It is also possible to produce a cup- or tray-shaped molded body or food package using the present multilayer structure (1). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-shaped multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the produced laminate may be subjected to processes such as heat treatment, cooling treatment, rolling, printing, dry lamination, solution or melt coating, bag-making, deep drawing, box processing, tube processing, and splitting.

Second Aspect

The second aspect includes the following aspects <II-1> to <II-10>.

<II-1> A resin composition containing:

    a PVA resin;
    a titanium compound; and
    an alkaline metal compound (B),
    wherein
    the PVA resin is an ethylene-modified PVA resin containing from 1 to 19 mol% of an ethylene structural unit, and a content of the titanium compound in terms of metal is from 0.0001 to 2 ppm relative to a mass of the resin composition.

<II-2> The resin composition according to <II-1>, wherein a content of the alkaline metal compound (B) in terms of metal is from 0.0001 to 5000 ppm relative to the mass of the resin composition.
<II-3> The resin composition according to <II-1> or <II-2>, wherein the alkaline metal compound (B) is a sodium compound.
<II-4> The resin composition according to any one of <II-1> to <II-3>, wherein the content of the titanium compound in terms of metal is 0.0001 ppm or more and less than 1 ppm relative to the mass of the resin composition.
<II-5> A molding material containing the resin composition described in any one of <II-1> to <II-4>.
<II-6> A multilayer structure including a layer containing the resin composition described in any one of <II-1> to <II-4>.
<II-7> A molded body including the multilayer structure described in <II-6>.

<II-8> A food package including the multilayer structure described in <II-6>.

<II-9> A method for producing the resin composition described in any one of <II-1> to <II-4>, the method including: melt-mixing a resin composition raw material containing the PVA resin and the titanium compound.

<II-10> A method for producing the multilayer structure described in <II-6>, the method including: melt-molding a layer containing the resin composition.

The present disclosure will be described below with reference to embodiments for carrying out the second aspect. However, the present disclosure is not limited to the embodiments described below.

Resin Composition

The resin composition according to the second aspect of the present disclosure (hereinafter, sometimes referred to as "the present resin composition (2)") contains a PVA resin as a main component, and contains a specific trace amount of a titanium compound and an alkaline metal compound (B).

That is, in the present resin composition (2), the base resin is a PVA resin, and the content of the PVA resin in the present resin composition (2) is usually 70 mass% or more, preferably 80 mass% or more, more preferably 90 mass% or more, and still more preferably 95 mass% or more.

Hereinafter, the respective components will be described.

PVA Resin

The PVA resin used in the present embodiment is an ethylene-modified PVA resin having an ethylene structural unit, and is usually produced by copolymerizing a vinyl ester-based monomer and ethylene in the presence of a polymerization initiator and saponifying the copolymer, and the same PVA resin as that described in the first aspect can be used.

Titanium Compound

As the titanium compound used in the present embodiment, the same titanium compound as that described in the first aspect can be used.

The content of the titanium compound in terms of metal is from 0.0001 to 2 ppm, preferably from 0.0001 to 1 ppm, more preferably 0.001 ppm or more and less than 1 ppm, and still more preferably from 0.01 to 0.5 ppm, relative to the mass of the resin composition. When the content of the titanium compound is equal to or higher than the lower limit value, an effect of suppressing thermal degradation tends to be excellent, and when the content is equal to or lower than the upper limit value, the thermal decomposition of the resin composition is less likely to occur, and the resin composition tends to be less likely to be colored.

The content of the titanium compound in terms of metal can be determined by weighing the present resin composition (2) in a platinum crucible, sequentially ashing the present resin composition (2) with a burner and an electric furnace, thermally decomposing the ashed product with nitric acid and hydrofluoric acid, treating the decomposed product with a mixed acid of dilute nitric acid and dilute hydrofluoric acid, making the treated product into a constant volume to prepare a constant volume liquid, and measuring the titanium in the constant volume liquid by ICP mass spectrometry using an ICP mass spectrometer (Agilent 8800, available from Agilent Technologies).

It is presumed that the thermal decomposition of the PVA resin is caused by the formation of a polyene structure in the main chain under alkaline conditions or by a dehydration reaction starting from an OH group in the PVA resin. In the present resin composition (2), titanium in the titanium compound is stabilized as a tetravalent ion, and therefore, when a polyene structure is formed in the main chain of the PVA resin, titanium is coordinated to a double bond of the polyene structure to form a chelate, whereby the PVA resin is stabilized. It is presumed that even a trace amount of the titanium compound suppresses further formation of the polyene structure.

Alkaline Metal Compound (B)

Examples of the alkaline metal compound (B) include salts and oxides of alkaline metals. One of these may be used alone, or two or more of these may be used in combination. Among these, the alkaline metal compound (B) is preferably water-soluble, and an alkaline metal salt is preferred from the viewpoint of dispersibility.

Examples of the alkaline metal salt include inorganic salts of alkaline metals, and carboxylates of alkaline metals. Among these, carboxylates of alkaline metals are preferred.

Examples of the inorganic salts of alkaline metals include carbonates, hydrogen carbonates, phosphates, borates, sulfates, and chlorides of alkaline metals.

Examples of the carboxylates of alkaline metals include carboxylates including: monocarboxylates having from 2 to 11 carbons such as acetates, butyrates, propionates, enanthates, and caprates; dicarboxylates having from 2 to 11 carbons such as oxalates, malonates, succinates, adipates, suberates, and sebacates; monocarboxylates having 12 or more carbons such as laurates, palmitates, stearates, 12-hydroxystearates, behenates, and montanates; and carboxylates with a polymerization terminal carboxy group of an ethylene-vinyl alcohol-based resin.

Examples of the alkaline metal species of the alkaline metal compound (B) include lithium, sodium, potassium, rubidium, and cesium. Among them, sodium and potassium are preferable, and sodium is particularly preferable.

For these reasons, the alkaline metal compound (B) is preferably a sodium compound, and more preferably a carboxylate of sodium.

The molecular weight or formula weight of the alkaline metal compound (B) is usually from 20 to 10000, preferably from 20 to 1000, and particularly preferably from 20 to 500.

Among these, sodium acetate is preferable as the alkaline metal compound (B). In addition, from the viewpoint of economic efficiency and dispersibility, the alkaline metal compound (B) preferably excludes inorganic layered compounds and double salts.

The content of the alkaline metal compound (B) in terms of metal mass is usually from 0.0001 to 5000 ppm, preferably from 0.1 to 800 ppm, more preferably from 5 to 500 ppm, and particularly preferably from 8 to 200 ppm, relative to the mass of the resin composition.

When the content of the alkaline metal compound (B) is equal to or lower than the upper limit value, the thermal stability tends to be improved, and when the content is equal to or higher than the lower limit value, the moldability of the resin composition tends to be improved.

The content of the alkaline metal compound (B) in terms of metal can be measured by an atomic absorption spectrophotometer using a test solution prepared by adding pure water to a solution prepared by subjecting a heated and ashed product of the present resin composition (2) to an acid treatment with hydrochloric acid or the like to make the volume constant.

The mass ratio of the content of the alkaline metal compound (B) in terms of metal to the content of the titanium compound in terms of metal is preferably from 0.01 to 50000, more preferably from 0.05 to 2500, and particularly preferably from 10 to 1000.

When the mass ratio is equal to or lower than the upper limit value, the thermal stability tends to be excellent, and when the mass ratio is equal to or higher than the lower limit value, the moldability of the resin composition tends to be excellent.

Although the reason why an excellent effect is achieved by using the alkaline metal compound (B) used in the present embodiment and the titanium compound in combination is not clear, probably, an interaction product (complex, alloy, or the like) is formed by using the titanium compound and the alkaline metal compound (B) in specific amounts in combination, and the interaction product further interacts with oxygen of an OH group present in the PVA resin, thereby suppressing formation of a polyene structure. As a result, it is presumed that the thermal stability is improved.

Additional Thermoplastic Resin

The present resin composition (2) can contain a thermoplastic resin other than the PVA resin within a range in which the effects of the present disclosure are not impaired (e.g., usually 30 mass% or less, preferably 20 mass% or less, and particularly preferably 10 mass% or less of the present resin composition (2), and the lower limit value is usually 0 mass%).

As the additional thermoplastic resin, the same additional thermoplastic resin as that described in the first aspect can be used.

Additional Compounding Agent

The present resin composition (2) may contain a compounding agent (however, excluding the titanium compound and the alkaline metal compound (B)) that is generally blended in the PVA-based resin within a range in which the effects of the present disclosure are not impaired (for example, usually 30 mass% or less, preferably 20 mass% or less, and particularly preferably 10 mass% or less of the present resin composition (2), and the lower limit value thereof is usually 0 mass%). Examples of the compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxyl group-containing phenolic aldehyde resins, a terpene compound, a blended material of a tertiary hydrogen-containing resin and a transition metal (for example, combination of polypropylene and cobalt), a blended material of a carbon-carbon unsaturated bond-containing resin and a transition metal (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a colorant, an antistatic agent, a surfactant (however, excluding those used as a lubricant), an antimicrobial agent, an anti-blocking agent, and a filler (for example, an inorganic filler). One of these compounds may be used alone or two or more thereof may be used in combination.

Method for Producing Resin Composition

The present resin composition (2) can be produced by mixing the PVA resin, the titanium compound, and the alkaline metal compound (B) by a known method, for example, a dry blending method, a melt-mixing method, a solution mixing method, an impregnation method, or the like, and, among these methods, the present resin composition (2) is preferably produced by incorporating a step of melt-mixing a resin composition raw material containing the PVA resin and the titanium compound. Furthermore, these manufacturing methods can be optionally combined.

Examples of the dry blending method include (i) a method of dry-blending a pellet-shaped PVA resin, an alkaline metal compound (B) and a titanium compound using a tumbler or the like.

Examples of the melt-mixing method include (ii) a method of dry-blending a pellet-shaped PVA resin, an alkaline metal compound (B) and a titanium compound and melt-kneading the resulting dry blend, and (iii) a method of adding an alkaline metal compound (B) and a titanium compound to a molten PVA resin and melt-kneading the resulting mixture.

Examples of the solution mixing method include (iv) a method of preparing a solution using a commercially available PVA resin, blending an alkaline metal compound (B) and a titanium compound therein, performing solidification molding, then performing solid-liquid separation with a known means, and drying the resulting product; and (v) a method of, in the process of producing a PVA resin, incorporating an alkaline metal compound (B) and a titanium compound in an ethylene-vinyl ester-based copolymer solution before saponification or a uniform solution of a PVA resin (water/alcohol solution or the like), performing solidification molding, then performing solid-liquid separation with a known means, and drying the resulting product.

Examples of the impregnation method include (vi) a method of bringing a pellet-shaped PVA resin into contact with an aqueous solution containing an alkaline metal compound (B) and a titanium compound, incorporating the alkaline metal compound (B) and the titanium compound in the PVA resin, and then drying the PVA resin.

As the aqueous solution containing a titanium compound, an aqueous solution of a titanium compound or an aqueous solution prepared by immersing a titanium compound in water containing various chemicals to elute titanium ions can be used.

In the impregnation method, the contents of the alkaline metal compound (B) and the titanium compound (in terms of metal) can be controlled with the concentrations of the alkaline metal compound (B) and the titanium compound in the aqueous solution in which the PVA resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present disclosure, the different methods described above can be combined. Among those, from the viewpoint of productivity and producing a resin composition that exhibits more significant effects of the present disclosure, a melt-mixing method is preferable, and the method (ii) is particularly preferable. In a case where the additional thermoplastic resin and an additional compounding agent are used, they are blended by a common process according to the aforementioned manufacturing method.

The present resin composition (2) produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, oval pellets have a minor axis length of usually from 1 to 10 mm, preferably from 2 to 6 mm, and more preferably from 2.5 to 5.5 mm, and a major axis length of usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-shaped PVA resin used in each of the production methods are preferably the same.

The moisture content of the present resin composition (2) is usually from 0.01 to 0.5 mass%, preferably from 0.05 to 0.35 mass%, and more preferably from 0.1 to 0.3 mass%.

The moisture content of the present resin composition (2) is measured and calculated by the following method.

The mass ($W_1$) of the present resin composition (2) before drying is weighed with an electronic balance, the resin composition is dried in a hot air dryer at 150°C for 5 hours and then cooled in a desiccator for 30 minutes, and then the mass ($W_2$) after cooling is weighed. The moisture content is calculated from the following equation.

Moisture content (mass%) = $[(W_1 - W_2)/W_1] \times 100$

When the present resin composition (2) is in the form of pellets, preferably, a known lubricant is adhered to the surface of the pellets from the viewpoint of stabilizing the feed properties during melt-molding. Examples of the type of lubricant include higher fatty acids having 12 or more carbons (e.g., lauric acid, myristic acid, palmitic acid, stearic acid, behenic acid, and oleic acid), higher fatty acid esters (such as methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. One of these compounds may be used alone or two or more thereof may be used in combination. The content of the lubricant is usually 5 mass% or less and preferably 1 mass% or less of the present resin composition (2). Note that the lower limit value is usually 0 mass%.

The present resin composition (2) thus produced can suppress thermal degradation at the time of heating, and the residual amount (%) of the present resin composition (2) at 550°C is usually 6 mass% or more, preferably 7 mass% or more, and more preferably 8 mass% or more.

The residual amount (%) at 550°C is preferably as high as possible, but the upper limit is usually 100 mass%.

The 10 mass% loss temperature (°C) of the present resin composition (2) is usually higher than 350°C, preferably 351°C or higher, and more preferably 356°C or higher.

The upper limit of the 10 mass% loss temperature (°C) is preferably as high as possible, but is usually 550°C.

A difference of 1°C in the mass loss temperature appears as a large difference in yield in actual production, and thus the difference is very large.

The "residual amount (%) at 550°C" and "10 mass% loss temperature (°C)" can be measured using a thermogravimetric analyzer, and for example, can be measured by a method described in Examples below.

A yellow index (YI) of the present resin composition (2) is usually less than 60, preferably 50 or less, more preferably 40 or less, and still more preferably 30 or less. The lower limit value is 0%.

The YI increase rate can be calculated by, for example, the method described in Examples below.

Molding Material

The present resin composition (2) thus produced is prepared into various forms such as a pellet, a powder form, or a liquid form, and is provided as a molding material for various molded bodies. In particular, in the present disclosure, when the composition is provided as a material for melt-molding, the effect of the present disclosure tends to be achieved more efficiently, which is preferable.

The present resin composition (2) also includes a resin composition produced by mixing resins other than the PVA resin used in the present resin composition (2).

Examples of the molded material include a monolayer film molded from the present resin composition (2) and a multilayer structure having at least one layer containing the present resin composition (2).

Multilayer Structure

A multilayer structure according to the second aspect of the present disclosure (hereinafter, referred to as "the present multilayer structure (2)") has a layer containing the present resin composition (2). When the layer containing the present resin composition (2) (hereinafter referred to simply as "the present resin composition layer (2)") is laminated with an additional substrate containing a thermoplastic resin other than the present resin composition (2) as a main component (hereinafter, the resin used for the substrate may be abbreviated as "substrate resin"), strength can be further imparted, the present resin composition layer (2) can be protected from the influence of moisture or the like, and other functions can be imparted.

Examples of the substrate resin include polyethylene including, for example, polyethylene-based resins such as linear low-density polyethylene, low-density polyethylene, ultra-low-density polyethylene, medium-density polyethylene, high-density polyethylene, ethylene-propylene (block and random) copolymers, and ethylene-$\alpha$-olefin (an $\alpha$-olefin having from 4 to 20 carbons) copolymers; polypropylene-based resins such as polypropylene and propylene-$\alpha$-olefin (an $\alpha$-olefin having from 4 to 20 carbons) copolymers; polyolefin-based resins in a broad sense including (unmodified) polyolefin-based resins such as polybutene, polypentene, and polycyclic olefin-based resins (polymers having a cyclic olefin structure in at least one of the main chain and a side chain), and modified olefin resins such as unsaturated carboxylic acid-modified polyolefin-based resins in which any of these polyolefins is graft-modified with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene-based resins; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. One of these may be used alone or two or more of these may be used in combination.

The terms "linear low-density polyethylene", "low-density polyethylene", "ultra-low-density polyethylene", "medium-density polyethylene", and "high-density polyethylene" are commonly used to represent the types of polyethylene.

Among these, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present resin composition layers (2) are denoted by a (a1, a2, ...) and the substrate resin layers are denoted by b (b1, b2, ...), the layer configuration of the present multilayer structure (2) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present resin composition (2) and a thermoplastic resin other than the present resin composition (2), which is produced by remelt-molding an end, a defective product, or the like generated in the process of producing the present multilayer structure (2), is denoted by R, the layer configuration can also be b/R/a, b/R/a/b, b/R/a/R/b, b/a/R/a/b, b/R/a/R/a/R/b, or the like. The number of layers of the present multilayer structure (2) in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Representative examples of the adhesive resin include carboxy group-containing modified polyolefin-based polymers produced by chemically bonding an unsaturated carboxylic acid or an anhydride thereof to a polyolefin-based resin by an addition reaction, a graft reaction, or the like. Examples of the carboxy group-containing modified polyolefin-based polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One of these may be used alone, or two or more of these may be used in combination.

In the present multilayer structure (2), in the case of using adhesive resin layers between the present resin composition layer (2) and the substrate resin layer, an adhesive resin having excellent hydrophobicity is preferably used because the adhesive resin layers are located on both sides of the present resin composition layer (2).

The substrate resin or the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the spirit of the present disclosure is not impeded (for example, 30 mass% or less, and preferably 10 mass% or less, with respect to the entire resin). One of these may be used alone or two or more of these may be used in combination.

The present resin composition layer (2) and the substrate resin layer can be laminated (including the case of interposing an adhesive resin layer) by a known method. Examples thereof include a method of melt-extrusion laminating the substrate resin to a film, a sheet, or the like of the present resin composition (2), a method of melt-extrusion laminating the present resin composition (2) to the substrate resin layer, a method of co-extruding the present resin composition (2) and the substrate resin, a method of dry laminating the present resin composition (2) (the present resin composition layer (2)) and the substrate resin (substrate resin layer) using a known adhesive such as an organic titanium compound, an isocyanate compound, a polyester-based compound, or a polyurethane compound, and a method of applying a solution of the present resin composition (2) onto the substrate resin and then removing the solvent. Among these, from the viewpoints of cost and the environment, manufacturing is preferably performed by melt-molding the present resin composition layer (2), and specifically by a co-extrusion method.

The present multilayer structure (2) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is equal to or higher than the lower limit value, stretchability tends to be excellent, and when the stretching temperature is equal to or lower than the upper limit value, a stable stretched state tends to be capable of being maintained.

The present multilayer structure (2) after the stretching treatment may be subjected to heat setting for the purpose of imparting dimensional stability. The heat setting can be carried out by a well-known means; for example, the stretch-treated present multilayer structure (2) is heat-treated usually at a temperature of from 80 to 180°C and preferably at a temperature of from 100 to 165°C usually for about from 2 to 600 seconds while the stretch-treated present multilayer structure (2) is kept in a state of tension.

In the case of using the stretch-treated present multilayer structure (2) as a shrink film, in order to impart heat shrinkability, the stretch-treated present multilayer structure (2) is not subjected to the heat setting described above, but subjected to a treatment such as application of cool air to the present multilayer structure after the stretching treatment to cool-set the structure.

The thickness of the present multilayer structure (2) (including a stretched multilayer structure), and the thicknesses of the present resin composition layer (2), the substrate resin layer, and the adhesive resin layer constituting the multilayer structure cannot be generally defined due to the layer configuration, the type of the substrate resin, the type of the adhesive resin, the application, the packaging form, the required physical properties, and the like, but the thickness of the present multilayer structure (2) (including a stretched multilayer structure) is usually from 10 to 5000 $\mu$m, preferably from 30 to 3000 $\mu$m, and more preferably from 50 to 2000 $\mu$m. The thickness of the present resin composition layer (2) is usually from 1 to 500 $\mu$m, preferably from 3 to 300 $\mu$m, and more preferably from 5 to 200 $\mu$m, the thickness of the substrate resin layer is usually from 5 to 3000 $\mu$m, preferably from 10 to 2000 $\mu$m, and particularly preferably from 20 to 1000 $\mu$m, and the thickness of the adhesive resin layer is usually from 0.5 to 250 $\mu$m, preferably from 1 to 150 $\mu$m, and more preferably from 3 to 100 $\mu$m.

Furthermore, the ratio of the thickness of the present resin composition layer (2) to the thickness of the substrate resin layer ((the present resin composition layer (2))/(substrate resin layer)) in the present multilayer structure (2) is usually from 1/99 to 50/50, preferably from 5/95 to 45/55, and more preferably from 10/90 to 40/60, with the proviso that, when at least one type of layer has a plurality of layers, the ratio is based on the thickness of the thickest corresponding layer. The thickness ratio of the present resin composition layer (2) to the adhesive resin layer (the present resin composition layer (2)/the adhesive resin layer) in the present multilayer structure (2) is usually from 10/90 to 99/1, preferably from 20/80 to 95/5, and more preferably from 50/50 to 90/10, with the proviso that, when at least one type of layer has a plurality of layers, the ratio is based on the thickness of the thickest corresponding layer.

It is also possible to produce a cup- or tray-shaped molded body or food package using the present multilayer structure (2). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-shaped multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the produced laminate may be subjected to processes such as heat treatment, cooling treatment, rolling, printing, dry lamination, solution or melt coating, bag-making, deep drawing, box processing, tube processing, and splitting.

Third Aspect

The third aspect includes the following aspects <III-1> to <III-9>.

<III-1> A resin composition containing:

a PVA resin;
a titanium compound; and
sorbic acid (C),
wherein
the PVA resin is an ethylene-modified PVA resin containing from 1 to 19 mol% of an ethylene structural unit, and
a content of the titanium compound in terms of metal is from 0.0001 to 2 ppm relative to a mass of the resin composition.

<III-2> The resin composition according to <III-1>, wherein a content of the sorbic acid (C) is from 0.005 to 100 ppm relative to the mass of the resin composition.

<III-3> The resin composition according to <III-1> or <III-2>, wherein the content of the titanium compound in terms of metal is 0.0001 ppm or more and less than 1 ppm relative to the mass of the resin composition.

<III-4> A molding material containing the resin composition described in any one of <III-1> to <III-3>.

<III-5> A multilayer structure including a layer containing the resin composition described in any one of <III-1> to <III-3>.

<III-6> A molded body including the multilayer structure described in <III-5>.

<III-7> A food package including the multilayer structure described in <III-5>.

<III-8> A method for producing the resin composition described in any one of <III-1> to <III-3>, the method including: melt-mixing a resin composition raw material containing the PVA resin and the titanium compound.

<III-9> A method for producing the multilayer structure described in <III-5>, the method including: melt-molding a layer containing the resin composition.

The present disclosure will be described below with reference to embodiments for carrying out the third aspect. However, the present disclosure is not limited to the embodiments described below.

Resin Composition

The resin composition according to the third aspect of the present disclosure (hereinafter, sometimes referred to as "the present resin composition (3)") contains a PVA resin as a main component, and contains a specific trace amount of a titanium compound and sorbic acid (C).

That is, in the present resin composition (3), the base resin is a PVA resin, and the content of the PVA resin in the present resin composition (3) is usually 70 mass% or more, preferably 80 mass% or more, more preferably 90 mass% or more, and still more preferably 95 mass% or more.

Hereinafter, the respective components will be described.

PVA Resin

The PVA resin used in the present embodiment is an ethylene-modified PVA resin having an ethylene structural unit, and is usually produced by copolymerizing a vinyl ester-based monomer and ethylene in the presence of a polymerization initiator and saponifying the copolymer, and the same PVA resin as that described in the first aspect can be used.

Titanium Compound

As the titanium compound used in the present embodiment, the same titanium compound as that described in the first aspect can be used.

The content of the titanium compound in terms of metal is from 0.0001 to 2 ppm, preferably from 0.0001 to 1 ppm, more preferably 0.001 ppm or more and less than 1 ppm, and still more preferably from 0.01 to 0.5 ppm, relative to the mass of the resin composition. When the content of the titanium compound is equal to or higher than the lower limit value, an effect of suppressing thermal degradation tends to be excellent, and when the content is equal to or lower than the upper limit value, the thermal decomposition of the resin composition is less likely to occur, and the resin composition tends to be less likely to be colored.

The content of the titanium compound in terms of metal can be determined by weighing the present resin composition (3) in a platinum crucible, sequentially ashing the present resin composition (3) with a burner and an electric furnace, thermally decomposing the ashed product with nitric acid and hydrofluoric acid, treating the decomposed product with a mixed acid of dilute nitric acid and dilute hydrofluoric acid, making the treated product into a constant volume to prepare a constant volume liquid, and measuring the titanium in the constant volume liquid by ICP mass spectrometry using an ICP mass spectrometer (Agilent 8800, available from Agilent Technologies).

It is presumed that the thermal decomposition of the PVA resin is caused by the formation of a polyene structure in the main chain under alkaline conditions or by a dehydration reaction starting from an OH group in the PVA resin. In the present resin composition (3), titanium in the titanium compound is stabilized as a tetravalent ion, and therefore, when a polyene structure is formed in the main chain of the PVA resin, titanium is coordinated to a double bond of the polyene structure to form a chelate, whereby the PVA resin is stabilized. It is presumed that even a trace amount of the titanium compound suppresses further formation of the polyene structure.

Sorbic Acid (C)

The sorbic acid (C) is preferable because it is a compound having a carboxy group from the viewpoint of high affinity with water, and further, because it is a chain compound having a carboxy group.

The content of the sorbic acid (C) is usually from 0.005 to 100 ppm, preferably from 0.01 to 75 ppm, and more preferably from 0.1 to 50 ppm, relative to the mass of the resin composition.

When the content of the sorbic acid (C) is equal to or lower than the upper limit value, the thermal stability tends to be excellent, and when the content is equal to or higher than the lower limit value, the moldability of the resin composition tends to be excellent.

The content of the sorbic acid (C) can be measured, for example, by using a liquid chromatograph-ultraviolet spectrometer according to the following procedure.

Method for Measuring Content of Sorbic Acid (C)

(1) To 1 g of a powder prepared by freeze-pulverizing the present resin composition (3), 8 mL of an extraction solvent (distilled water: methanol = 1:1, volume ratio) is added.

(2) This solution is subjected to an ultrasonic treatment at a temperature of 20°C in a standing state for 1 hour to extract sorbic acid in the resin, and after cooling, the volume is adjusted to be constant, 10 mL, with an extraction solvent. Further, the solution may be diluted to any ratio as necessary.

(3) The solution is filtered through a filter having a pore size of 0.45 $\mu$m, and then sorbic acid in the extracted solution is measured with a liquid chromatograph-ultraviolet spectrometer.

(4) A calibration curve is prepared from a standard solution of sorbic acid prepared using the extraction solvent, and the content of the sorbic acid is determined by an absolute calibration curve method.

HPLC Measurement Conditions

- LC system: Agilent 1260/1290 [available from Agilent Technologies]
- Detector: Agilent 1260 infinity diode-array detector [available from Agilent Technologies]
- Column: Cadenza CD-C18 (100 × 3.0 mm, 3 $\mu$m) [available from Imtakt]
- Column temperature: 40°C
- Mobile phase A: aqueous solution of 5% acetonitrile containing 0.05% formic acid
- Mobile phase B: aqueous solution of 95% acetonitrile containing 0.05% formic acid
- Time program: $0.0 \rightarrow 5.0$ min B% = 30%

  $5.0 \rightarrow 8.0$ min B% = 30% $\rightarrow$ 50%
  $8.0 \rightarrow 10.0$ min B% = 50%
  $10.0 \rightarrow 13.0$ min B% = 50% $\rightarrow$ 30%
  $13.0 \rightarrow 15.0$ min B% = 30%

- Flow rate: 0.2 mL/min
- UV detection wavelength: from 190 to 400 nm
- Quantitative wavelength: 262 nm

In the HPLC measurement conditions, "%" means vol%.

The mass ratio of the content of the sorbic acid (C) to the content of the titanium compound in terms of metal is preferably from 0.0025 to 1000000, more preferably from 0.05 to 50000, and particularly preferably from 10 to 1000.

When the mass ratio is equal to or lower than the upper limit value, the thermal stability tends to be excellent, and when the mass ratio is equal to or higher than the lower limit value, the moldability of the resin composition tends to be excellent.

Although the reason why an excellent effect is achieved by blending the titanium compound and the sorbic acid (C) in appropriate amounts is not clear, it is presumed that combined use of the titanium compound and the sorbic acid (C) in specific amounts moderately lowers the pH and strengthens the hydrogen bond in the hydroxy group of the PVA resin, thereby improving the thermal stability.

Additional Thermoplastic Resin

The present resin composition (3) can contain a thermoplastic resin other than the PVA resin within a range in which the effects of the present disclosure are not impaired (e.g., usually 30 mass% or less, preferably 20 mass% or less, and particularly preferably 10 mass% or less of the present resin composition (3), and the lower limit value is usually 0 mass%).

As the additional thermoplastic resin, the same additional thermoplastic resin as that described in the first aspect can be used.

Additional Compounding Agent

The present resin composition (3) may contain a compounding agent (however, excluding the titanium compound and the sorbic acid (C)) that is generally blended in the PVA resin within a range in which the effects of the present disclosure are not impaired (for example, usually 30 mass% or less, preferably 20 mass% or less, and particularly preferably 10 mass% or less of the resin composition, and the lower limit value thereof is usually 0 mass%). Examples of the compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxyl group-containing phenolic aldehyde resins, a terpene compound, a blended material of a tertiary hydrogen-containing resin and a transition metal (for example, combination of polypropylene and cobalt), a blended material of a carbon-carbon unsaturated bond-containing resin and a transition metal (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a colorant, an antistatic agent, a surfactant (however, excluding those used as a lubricant), an antimicrobial agent, an anti-blocking agent, and a filler (for example, an inorganic filler). One of these compounds may be used alone or two or more thereof may be used in combination.

Method for Producing Resin Composition

The present resin composition (3) can be produced by mixing the PVA resin, the titanium compound, and the sorbic acid (C) by a known method, for example, a dry blending method, a melt-mixing method, a solution mixing method, an impregnation method, or the like, and, among these methods, the present resin composition (3) is preferably produced by incorporating a step of melt-mixing a resin composition raw material containing the PVA resin and the titanium compound. Furthermore, these manufacturing methods can be optionally combined.

Examples of the dry blending method include (i) a method of dry-blending a pellet-shaped PVA resin, sorbic acid (C) and a titanium compound using a tumbler or the like.

Examples of the melt-mixing method include (ii) a method of dry-blending a pellet-shaped PVA resin, sorbic acid (C) and a titanium compound and melt-kneading the resulting dry blend, and (iii) a method of adding sorbic acid (C) and a titanium compound to a molten PVA resin and melt-kneading the resulting mixture.

Examples of the solution mixing method include (iv) a method of preparing a solution using a commercially available PVA resin, blending sorbic acid (C) and a titanium compound therein, performing solidification molding, then performing solid-liquid separation with a known means, and drying the resulting product; and (v) a method of, in the process of producing a PVA resin, incorporating sorbic acid (C) and a titanium compound in an ethylene-vinyl ester-based copolymer solution before saponification or a uniform solution of a PVA resin (water/alcohol solution or the like), performing solidification molding, then performing solid-liquid separation with a known means, and drying the resulting product.

Examples of the impregnation method include (vi) a method of bringing a pellet-shaped PVA resin into contact with an aqueous solution containing sorbic acid (C) and a titanium compound, incorporating the sorbic acid (C) and the titanium compound in the PVA resin, and then drying the PVA resin.

As the aqueous solution containing a titanium compound, an aqueous solution of a titanium compound or an aqueous solution prepared by immersing a titanium compound in water containing various chemicals to elute titanium ions can be used.

In the impregnation method, the contents of the sorbic acid (C) and the titanium compound (in terms of metal) can be controlled with the concentration of the sorbic acid (C) and the titanium compound in the aqueous solution in which the PVA resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present disclosure, the different methods described above can be combined. Among those, from the viewpoint of productivity and producing a resin composition that exhibits more significant effects of the present disclosure, a melt-mixing method is preferable, and the method (ii) is particularly preferable. In a case where the additional thermoplastic resin and an additional compounding agent are used, they are blended by a common process according to the aforementioned manufacturing method.

The present resin composition (3) produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, oval pellets have a minor axis length of usually from 1 to 10 mm, preferably from 2 to 6 mm, and more preferably from 2.5 to 5.5 mm, and a major axis length of usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-shaped PVA resin used in each of the production methods are preferably the same.

The moisture content of the present resin composition (3) is usually from 0.01 to 0.5 mass%, preferably from 0.05 to 0.35 mass%, and more preferably from 0.1 to 0.3 mass%.

The moisture content of the present resin composition (3) is measured and calculated by the following method.

The mass ($W_1$) of the present resin composition (3) before drying is weighed with an electronic balance, the resin composition is dried in a hot air dryer at 150°C for 5 hours and then cooled in a desiccator for 30 minutes, and then the mass ($W_2$) after cooling is weighed. The moisture content is calculated from the following equation.

$$\text{Moisture content (mass\%)} = [(W_1 - W_2)/W_1] \times 100$$

When the present resin composition (3) is in the form of pellets, preferably, a known lubricant is adhered to the surface of the pellets from the viewpoint of stabilizing the feed properties during melt-molding. Examples of the type of lubricant include higher fatty acids having 12 or more carbons (e.g., lauric acid, myristic acid, palmitic acid, stearic acid, behenic acid, and oleic acid), higher fatty acid esters (such as methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. One of these compounds may be used alone or two or more thereof may be used in combination. The content of the lubricant is usually 5 mass% or less and preferably 1 mass% or less of the present resin composition (3). Note that the lower limit value is usually 0 mass%.

The present resin composition (3) thus produced can suppress thermal degradation at the time of heating, and the 40 mass% loss temperature (°C) of the present resin composition (3) is usually 391°C or higher, preferably 393°C or higher, and more preferably 395°C or higher.

The 40 mass% loss temperature (°C) is preferably as high as possible, but the upper limit is usually 550°C.

The 5 mass% loss temperature (°C) of the present resin composition (3) is usually higher than 336°C, and preferably 340°C or higher.

The upper limit of the 5 mass% loss temperature (°C) is preferably as high as possible, but is usually 550°C.

A difference of 1°C in the mass loss temperature appears as a large difference in yield in actual production, and thus the difference is very large.

The "40 mass% loss temperature (°C)" and "5 mass% loss temperature (°C)" can be measured using a thermogravimetric analyzer, and for example, can be measured by a method described in Examples below.

Molding Material

The present resin composition (3) thus produced is prepared into various forms such as a pellet, a powder form, or a liquid form, and is provided as a molding material for various molded bodies. In particular, in the present disclosure, when the composition is provided as a material for melt-molding, the effect of the present disclosure tends to be achieved more efficiently, which is preferable.

The present resin composition (3) also includes a resin composition produced by mixing resins other than the PVA resin used in the present resin composition (3).

Examples of the molded body include a monolayer film molded from the present resin composition (3) and a multilayer structure having at least one layer containing the present resin composition (3).

Multilayer Structure

A multilayer structure according to the third aspect of the present disclosure (hereinafter, referred to as "the present multilayer structure (3)") has a layer containing the present resin composition (3). When the layer containing the present resin composition (3) (hereinafter referred to simply as "the present resin composition layer (3)") is laminated with an additional substrate containing a thermoplastic resin other than the present resin composition (3) as a main component (hereinafter, the resin used for the substrate may be abbreviated as "substrate resin"), strength can be further imparted, the present resin composition layer (3) can be protected from the influence of moisture or the like, and other functions can be imparted.

Examples of the substrate resin include polyethylene-based resins such as linear low-density polyethylene, low-density polyethylene, ultra-low-density polyethylene, medium-density polyethylene, high-density polyethylene, ethylene-propylene (block and random) copolymers, and ethylene-$\alpha$-olefin (an $\alpha$-olefin having from 4 to 20 carbons) copolymers; polypropylene-based resins such as polypropylene and propylene-$\alpha$-olefin (an $\alpha$-olefin having from 4 to 20 carbons) copolymers; polyolefin-based resins in a broad sense including (unmodified) polyolefin-based resins such as polybutene, polypentene, and polycyclic olefin-based resins (polymers having a cyclic olefin structure in at least one of the main chain and a side chain), and modified olefin resins such as unsaturated carboxylic acid-modified polyolefin-based resins in which any of these polyolefins is graft-modified with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene-based resins; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. One of these may be used alone or two or more of these may be used in combination.

The terms "linear low-density polyethylene", "low-density polyethylene", "ultra-low-density polyethylene", "medium-density polyethylene", and "high-density polyethylene" are commonly used to represent the types of polyethylene.

Among these, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present resin composition layers (3) are denoted by a (a1, a2, ...) and the substrate resin layers are denoted by b (b1, b2, ...), the layer configuration of the present multilayer structure (3) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present resin composition (3) and a thermoplastic resin other than the present resin composition (3), which is produced by remelt-molding an end, a defective product, or the like generated in the process of producing the present multilayer structure (3), is denoted by R, the layer configuration can also be b/R/a, b/R/a/b, b/R/a/R/b, b/a/R/a/b, b/R/a/R/a/R/b, or the like. The number of layers of the present multilayer structure (3) in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Representative examples of the adhesive resin include carboxy group-containing modified polyolefin-based polymers produced by chemically bonding an unsaturated carboxylic acid or an anhydride thereof to a polyolefin-based resin by an addition reaction, a graft reaction, or the like. Examples of the carboxy group-containing modified polyolefin-based polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One of these may be used alone, or two or more of these may be used in combination.

In the present multilayer structure (3), in the case of using adhesive resin layers between the present resin composition layer (3) and the substrate resin layer, an adhesive resin having excellent hydrophobicity is preferably used because the adhesive resin layers are located on both sides of the present resin composition layer (3).

The substrate resin or the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the spirit of the present disclosure is not impeded (for example, 30 mass% or less, and preferably 10 mass% or less, with respect to the entire resin). One of these may be used alone or two or more of these may be used in combination.

The present resin composition layer (3) and the substrate resin layer can be laminated (including the case of interposing an adhesive resin layer) by a known method. Examples thereof include a method of melt-extrusion laminating the substrate resin to a film, a sheet, or the like of the present resin composition (3), a method of melt-extrusion laminating the present resin composition (3) to the substrate resin layer, a method of co-extruding the present resin composition (3) and the substrate resin, a method of dry laminating the present resin composition (3) (the present resin composition layer (3)) and the substrate resin (substrate resin layer) using a known adhesive such as an organic titanium compound, an isocyanate compound, a polyester compound, or a polyurethane-based compound, and a method of applying a solution of the present resin composition (3) onto the substrate resin and then removing the solvent. Among these, from the viewpoints of cost and the environment, manufacturing is preferably performed by melt-molding the present resin composition layer (3), and specifically by a co-extrusion method.

The present multilayer structure (3) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is equal to or higher than the lower limit value, stretchability tends to be excellent, and when the stretching temperature is equal to or lower than the upper limit value, a stable stretched state tends to be capable of being maintained.

The present multilayer structure (3) after the stretching treatment may be subjected to heat setting for the purpose of imparting dimensional stability. The heat setting can be carried out by a well-known means; for example, the stretch-treated present multilayer structure (3) is heat-treated usually at a temperature of from 80 to 180°C and preferably at a temperature of from 100 to 165°C usually for about from 2 to 600 seconds while the stretch-treated present multilayer structure (3) is kept in a state of tension.

In the case of using the stretch-treated present multilayer structure (3) as a shrink film, in order to impart heat shrinkability, the stretch-treated present multilayer structure (3) is not subjected to the heat setting described above, but subjected to a treatment such as application of cool air to the present multilayer structure after the stretching treatment to cool-set the structure.

The thickness of the present multilayer structure (3) (including a stretched multilayer structure), and the thicknesses of the present resin composition layer (3), the substrate resin layer, and the adhesive resin layer constituting the multilayer structure cannot be generally defined due to the layer configuration, the type of the substrate resin, the type of the adhesive resin, the application, the packaging form, the required physical properties, and the like, but the thickness of the present multilayer structure (3) (including a stretched multilayer structure) is usually from 10 to 5000 $\mu$m, preferably from 30 to 3000 $\mu$m, and more preferably from 50 to 2000 $\mu$m. The thickness of the present resin composition layer (3) is usually from 1 to 500 $\mu$m, preferably from 3 to 300 $\mu$m, and more preferably from 5 to 200 $\mu$m, the thickness of the substrate resin layer is usually from 5 to 3000 $\mu$m, preferably from 10 to 2000 $\mu$m, and particularly preferably from 20 to 1000 $\mu$m, and the thickness of the adhesive resin layer is usually from 0.5 to 250 $\mu$m, preferably from 1 to 150 $\mu$m, and more preferably from 3 to 100 $\mu$m.

Furthermore, the ratio of the thickness of the present resin composition layer (3) to the thickness of the substrate resin layer ((the present resin composition layer (3))/(substrate resin layer)) in the present multilayer structure (3) is usually from 1/99 to 50/50, preferably from 5/95 to 45/55, and more preferably from 10/90 to 40/60, with the proviso that, when at least one type of layer has a plurality of layers, the ratio is based on the thickness of the thickest corresponding layer. The thickness ratio of the present resin composition layer (3) to the adhesive resin layer (the present resin composition layer (3)/the adhesive resin layer) in the present multilayer structure (3) is usually from 10/90 to 99/1, preferably from 20/80 to 95/5, and more preferably from 50/50 to 90/10, with the proviso that, when at least one type of layer has a plurality of layers, the ratio is based on the thickness of the thickest corresponding layer.

It is also possible to produce a cup- or tray-shaped molded body or food package using the present multilayer structure (3). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-shaped multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the produced laminate may be subjected to processes such as heat treatment, cooling treatment, rolling, printing, dry lamination, solution or melt coating, bag-making, deep drawing, box processing, tube processing, and splitting.

Fourth Aspect

The fourth aspect includes the following aspects <IV-1> to <IV-9>.

<IV-1> A resin composition containing:

a PVA resin;
a titanium compound; and
acetic acid (D),
wherein
the PVA resin is an ethylene-modified PVA resin containing from 1 to 19 mol% of an ethylene structural unit, and a content of the titanium compound in terms of metal is from 0.0001 to 2 ppm relative to a mass of the resin composition.

<IV-2> The resin composition according to <IV-1>, wherein a content of the acetic acid (D) is from 10 to 10000 ppm relative to the mass of the resin composition.
<IV-3> The resin composition according to <IV-1> or <IV-2>, wherein the content of the titanium compound in terms of metal is 0.0001 ppm or more and less than 1 ppm relative to the mass of the resin composition.
<IV-4> A molding material containing the resin composition described in any one of <IV-1> to <IV-3>.
<IV-5> A multilayer structure including a layer containing the resin composition described in any one of <IV-1> to <IV-3>.
<IV-6> A molded body including the multilayer structure described in <IV-5>.
<IV-7> A food package including the multilayer structure described in <IV-5>.
<IV-8> A method for producing the resin composition described in any one of <IV-1> to <IV-3>, the method including: melt-mixing a resin composition raw material containing the PVA resin and the titanium compound.
<IV-9> A method for producing the multilayer structure described in <IV-5>, the method including: melt-molding a layer containing the resin composition.

The present disclosure will be described below with reference to embodiments for carrying out the fourth aspect. However, the present disclosure is not limited to the embodiments described below.

Resin Composition

The resin composition according to the fourth aspect of the present disclosure (hereinafter, sometimes referred to as "the present resin composition (4)") contains a PVA resin as a main component, and contains acetic acid (D) and a specific trace amount of a titanium compound.
That is, in the present resin composition (4), the base resin is a PVA resin, and the content of the PVA resin in the present resin composition (4) is usually 70 mass% or more, preferably 80 mass% or more, more preferably 90 mass% or more, and still more preferably 95 mass% or more.
Hereinafter, the respective components will be described.

PVA Resin

The PVA resin used in the present embodiment is an ethylene-modified PVA resin having an ethylene structural unit, and is usually produced by copolymerizing a vinyl ester monomer and ethylene in the presence of a polymerization initiator and saponifying the copolymer, and the same PVA resin as that described in the first aspect can be used.

Titanium Compound

As the titanium compound used in the present embodiment, the same titanium compound as that described in the first aspect can be used.
The content of the titanium compound in terms of metal is from 0.0001 to 2 ppm, preferably from 0.0001 to 1 ppm, more preferably 0.001 ppm or more and less than 1 ppm, and still more preferably from 0.01 to 0.5 ppm, relative to the mass of the resin composition. When the content of the titanium compound is equal to or higher than the lower limit value, an effect of suppressing thermal degradation tends to be excellent, and when the content is equal to or lower than the upper limit value, the thermal decomposition of the resin composition is less likely to occur, and the resin composition tends to be less likely to be colored.
The content of the titanium compound in terms of metal can be determined by weighing the present resin composition (4) in a platinum crucible, sequentially ashing the present resin composition (4) with a burner and an electric furnace, thermally decomposing the ashed product with nitric acid and hydrofluoric acid, treating the decomposed product with a mixed acid of dilute nitric acid and dilute hydrofluoric acid, making the treated product into a constant volume to prepare a constant volume liquid, and measuring the titanium in the constant volume liquid by ICP mass spectrometry using an ICP mass spectrometer (Agilent 8800, available from Agilent Technologies).

It is presumed that the thermal decomposition of the PVA resin is caused by the formation of a polyene structure in the main chain under alkaline conditions or by a dehydration reaction starting from an OH group in the PVA resin. In the present resin composition (4), titanium in the titanium compound is stabilized as a tetravalent ion, and therefore, when a polyene structure is formed in the main chain of the PVA resin, titanium is coordinated to a double bond of the polyene structure to form a chelate, whereby the PVA resin is stabilized. It is presumed that even a trace amount of the titanium compound suppresses further formation of the polyene structure.

Acetic Acid (D)

The content of the acetic acid (D) is usually from 0.01 to 10000 ppm, preferably from 0.1 to 10000 ppm, more preferably from 10 to 10000 ppm, still more preferably from 20 to 800 ppm, and particularly preferably from 50 to 500 ppm, relative to the mass of the resin composition.

When the content of the acetic acid (D) is equal to or lower than the upper limit value, the thermal stability tends to be excellent, and when the content is equal to or higher than the lower limit value, the moldability of the resin composition tends to be excellent.

The content of the acetic acid (D) can be measured by a known analytical method. For example, the content can be measured by liquid chromatography mass spectrometry (LC/MS), gas chromatography mass spectrometry (GC/MS), or the like.

The ratio of the content of the acetic acid (D) to the content of the titanium compound in terms of metal is preferably from 0.01 to 50000, more preferably from 0.05 to 2500, and particularly preferably from 10 to 1000.

When the mass ratio is equal to or lower than the upper limit value, the thermal stability tends to be excellent, and when the mass ratio is equal to or higher than the lower limit value, the moldability of the resin composition tends to be excellent.

Although the reason why an excellent effect is achieved by blending the titanium compound and the acetic acid (D) in appropriate amounts is not clear, probably, combined use of the titanium compound and the acetic acid (D) in specific amounts moderately lowers the pH and strengthens the hydrogen bond in the hydroxy group of the PVA resin, thereby improving the thermal stability.

Additional Thermoplastic Resin

The present resin composition (4) can contain a thermoplastic resin other than the PVA resin within a range in which the effects of the present disclosure are not impaired (e.g., usually 30 mass% or less, preferably 20 mass% or less, and particularly preferably 10 mass% or less of the present resin composition (4), and the lower limit value is usually 0 mass%).

As the additional thermoplastic resin, the same additional thermoplastic resin as that described in the first aspect can be used.

Additional Compounding Agent

The present resin composition (4) may contain a compounding agent (however, excluding the titanium compound and the acetic acid (D)) that is generally blended in the PVA resin within a range in which the effects of the present disclosure are not impaired (for example, usually 30 mass% or less, preferably 20 mass% or less, and particularly preferably 10 mass% or less of the present resin composition (4), and the lower limit value thereof is usually 0 mass%). Examples of the compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxyl group-containing phenolic aldehyde resins, a terpene compound, a blended material of a tertiary hydrogen-containing resin and a transition metal (for example, combination of polypropylene and cobalt), a blended material of a carbon-carbon unsaturated bond-containing resin and a transition metal (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a colorant, an antistatic agent, a surfactant (however, excluding those used as a lubricant), an antimicrobial agent, an anti-blocking agent, and a filler (for example, an inorganic filler). One of these compounds may be used alone or two or more thereof may be used in combination.

Method for Producing Resin Composition

The present resin composition (4) can be produced by mixing the PVA resin, the titanium compound, and the acetic acid (D) by a known method, for example, a dry blending method, a melt-mixing method, a solution mixing method, an impregnation method, or the like, and, among these methods, the present resin composition (4) is preferably produced by incorporating a step of melt-mixing a resin composition raw material containing the PVA resin and the titanium compound. Furthermore, these manufacturing methods can be optionally combined.

Examples of the dry blending method include (i) a method of dry-blending a pellet-shaped PVA resin, acetic acid (D) and a titanium compound using a tumbler or the like.

Examples of the melt-mixing method include (ii) a method of dry-blending a pellet-shaped PVA resin, acetic acid (D) and a titanium compound and melt-kneading the resulting dry blend, and (iii) a method of adding acetic acid (D) and a titanium compound to a molten PVA resin and melt-kneading the resulting mixture.

Examples of the solution mixing method include (iv) a method of preparing a solution using a commercially available PVA resin, blending acetic acid (D) and a titanium compound therein, performing solidification molding, then performing solid-liquid separation with a known means, and drying the resulting product; and (v) a method of, in the process of producing a PVA resin, incorporating acetic acid (D) and a titanium compound in an ethylene-vinyl ester copolymer solution before saponification or a uniform solution of a PVA resin (water/alcohol solution or the like), performing solidification molding, then performing solid-liquid separation with a known means, and drying the resulting product.

Examples of the impregnation method include (vi) a method of bringing a pellet-shaped PVA resin into contact with an aqueous solution containing acetic acid (D) and a titanium compound, incorporating the acetic acid (D) and the titanium compound in the PVA resin, and then drying the PVA resin.

As the aqueous solution containing a titanium compound, an aqueous solution of a titanium compound or an aqueous solution prepared by immersing a titanium compound in water containing various chemicals to elute titanium ions can be used.

In the impregnation method, the contents of the acetic acid (D) and the titanium compound (in terms of metal) can be controlled with the concentration of the acetic acid (D) and the titanium compound in the aqueous solution in which the PVA resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present disclosure, the different methods described above can be combined. Among those, from the viewpoint of productivity and producing a resin composition that exhibits more significant effects of the present disclosure, a melt-mixing method is preferable, and the method (ii) is particularly preferable. In a case where the additional thermoplastic resin and an additional compounding agent are used, they are blended by a common process according to the aforementioned manufacturing method.

The present resin composition (4) produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, oval pellets have a minor axis length of usually from 1 to 10 mm, preferably from 2 to 6 mm, and more preferably from 2.5 to 5.5 mm, and a major axis length of usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-shaped PVA resin used in each of the production methods are preferably the same.

The moisture content of the present resin composition (4) is usually from 0.01 to 0.5 mass%, preferably from 0.05 to 0.35 mass%, and more preferably from 0.1 to 0.3 mass%.

The moisture content of the present resin composition (4) is measured and calculated by the following method.

The mass ($W_1$) of the present resin composition (4) before drying is weighed with an electronic balance, the resin composition is dried in a hot air dryer at 150°C for 5 hours and then cooled in a desiccator for 30 minutes, and then the mass ($W_2$) after cooling is weighed. The moisture content is calculated from the following equation.

$$\text{Moisture content (mass\%)} = [(W_1 - W_2)/W_1] \times 100$$

When the present resin composition (4) is in the form of pellets, preferably, a known lubricant is adhered to the surface of the pellets from the viewpoint of stabilizing the feed properties during melt-molding. Examples of the type of lubricant include higher fatty acids having 12 or more carbons (e.g., lauric acid, myristic acid, palmitic acid, stearic acid, behenic acid, and oleic acid), higher fatty acid esters (such as methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. One of these compounds may be used alone or two or more thereof may be used in combination. The content of the lubricant is usually 5 mass% or less and preferably 1 mass% or less of the present resin composition (4). Note that the lower limit value is usually 0 mass%.

The present resin composition (4) thus produced can suppress thermal degradation at the time of heating, and the 5 mass% loss temperature (°C) of the present resin composition (4) is usually 345°C or higher.

The 5 mass% loss temperature (°C) is preferably as high as possible, but the upper limit is usually 700°C.

A difference of 0.1°C in the mass loss temperature appears as a large difference in yield in actual production, and thus the difference is very large.

The residual amount (%) at 550°C of the present resin composition (4) is usually 2.0 mass% or more, preferably 3 mass% or more, and more preferably 3.5 mass% or more.

The residual amount (%) at 550°C is preferably as high as possible, but the upper limit is usually 100 mass%.

The "5 mass% loss temperature (°C)" and "residual amount (%) at 550°C" can be measured using a thermogravimetric analyzer, and for example, can be measured by a method described in Examples below.

Molding Material

The present resin composition (4) thus produced is prepared into various forms such as a pellet, a powder form, or a liquid form, and is provided as a molding material for various molded bodies. In particular, in the present disclosure, when the composition is provided as a material for melt-molding, the effect of the present disclosure tends to be achieved more efficiently, which is preferable.

The present resin composition (4) also includes a resin composition produced by mixing resins other than the PVA resin used in the present resin composition (4).

Examples of the molded material include a monolayer film molded from the present resin composition (4) and a multilayer structure having at least one layer containing the present resin composition (4).

Multilayer Structure

A multilayer structure according to the fourth aspect of the present disclosure (hereinafter, referred to as "the present multilayer structure (4)") has a layer containing the present resin composition (4). When the layer containing the present resin composition (4) (hereinafter referred to simply as "the present resin composition layer (4)") is laminated with an additional substrate containing a thermoplastic resin other than the present resin composition (4) as a main component (hereinafter, the resin used for the substrate may be abbreviated as "substrate resin"), strength can be further imparted, the present resin composition layer (4) can be protected from the influence of moisture or the like, and other functions can be imparted.

Examples of the substrate resin include polyethylene-based resins such as linear low-density polyethylene, low-density polyethylene, ultra-low-density polyethylene, medium-density polyethylene, high-density polyethylene, ethylene-propylene (block and random) copolymers, and ethylene-$\alpha$-olefin (an $\alpha$-olefin having from 4 to 20 carbons) copolymers; polypropylene-based resins such as polypropylene and propylene-$\alpha$-olefin (an $\alpha$-olefin having from 4 to 20 carbons) copolymers; polyolefin-based resins in a broad sense including (unmodified) polyolefin-based resins such as polybutene, polypentene, and polycyclic olefin-based resins (polymers having a cyclic olefin structure in at least one of the main chain and a side chain), and modified olefin resins such as unsaturated carboxylic acid-modified polyolefin-based resins in which any of these polyolefins is graft-modified with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene-based resins; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. One of these may be used alone or two or more of these may be used in combination.

The terms "linear low-density polyethylene", "low-density polyethylene", "ultra-low-density polyethylene", "medium-density polyethylene", and "high-density polyethylene" are commonly used to represent the types of polyethylene.

Among these, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present resin composition layers (4) are denoted by a (a1, a2, ...) and the substrate resin layers are denoted by b (b1, b2, ...), the layer configuration of the present multilayer structure (4) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present resin composition (4) and a thermoplastic resin other than the present resin composition (4), which is produced by remelt-molding an end, a defective product, or the like generated in the process of producing the present multilayer structure (4), is denoted by R, the layer configuration can also be b/R/a, b/R/a/b, b/R/a/R/b, b/a/R/a/b, b/R/a/R/a/R/b, or the like. The number of layers of the present multilayer structure (4) in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Representative examples of the adhesive resin include carboxy group-containing modified polyolefin-based polymers produced by chemically bonding an unsaturated carboxylic acid or an anhydride thereof to a polyolefin-based resin by an addition reaction, a graft reaction, or the like. Examples of the carboxy group-containing modified polyolefin-based polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One of these may be used alone, or two or more of these may be used in combination.

In the present multilayer structure (4), in the case of using adhesive resin layers between the present resin composition layer (4) and the substrate resin layer, an adhesive resin having excellent hydrophobicity is preferably used because the adhesive resin layers are located on both sides of the present resin composition layer (4).

The substrate resin or the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the spirit of the present disclosure is not impeded (for example, 30 mass% or less, and preferably 10 mass% or less, with respect to the entire resin). One of these may be used alone or two or more of these may be used in combination.

The present resin composition layer (4) and the substrate resin layer can be laminated (including the case of interposing an adhesive resin layer) by a known method. Examples thereof include a method of melt-extrusion laminating the substrate resin to a film, a sheet, or the like of the present resin composition (4), a method of melt-extrusion laminating the present resin composition (4) to the substrate resin layer, a method of co-extruding the present resin composition (4) and the substrate resin, a method of dry laminating the present resin composition (4) (the present resin composition layer (4)) and the substrate resin (substrate resin layer) using a known adhesive such as an organic titanium compound, an isocyanate compound, a polyester-based compound, or a polyurethane compound, and a method of applying a solution of the present resin composition (4) onto the substrate resin and then removing the solvent. Among these, from the viewpoints of cost and the environment, manufacturing is preferably performed by melt-molding the present resin composition layer (4), and specifically by a co-extrusion method.

The present multilayer structure (4) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is equal to or higher than the lower limit value, stretchability tends to be excellent, and when the stretching temperature is equal to or lower than the upper limit value, a stable stretched state tends to be capable of being maintained.

The present multilayer structure (4) after the stretching treatment may be subjected to heat setting for the purpose of imparting dimensional stability. The heat setting can be carried out by a well-known means; for example, the stretch-treated present multilayer structure (4) is heat-treated usually at a temperature of from 80 to 180°C and preferably at a temperature of from 100 to 165°C usually for about from 2 to 600 seconds while the stretch-treated present multilayer structure (4) is kept in a state of tension.

In the case of using the stretch-treated present multilayer structure (4) as a shrink film, in order to impart heat shrinkability, the stretch-treated present multilayer structure (4) is not subjected to the heat setting described above, but subjected to a treatment such as application of cool air to the present multilayer structure after the stretching treatment to cool-set the structure.

The thickness of the present multilayer structure (4) (including a stretched multilayer structure), and the thicknesses of the present resin composition layer (4), the substrate resin layer, and the adhesive resin layer constituting the multilayer structure cannot be generally defined due to the layer configuration, the type of the substrate resin, the type of the adhesive resin, the application, the packaging form, the required physical properties, and the like, but the thickness of the present multilayer structure (4) (including a stretched multilayer structure) is usually from 10 to 5000 $\mu$m, preferably from 30 to 3000 $\mu$m, and more preferably from 50 to 2000 $\mu$m. The thickness of the present resin composition layer (4) is usually from 1 to 500 $\mu$m, preferably from 3 to 300 $\mu$m, and more preferably from 5 to 200 $\mu$m, the thickness of the substrate resin layer is usually from 5 to 3000 $\mu$m, preferably from 10 to 2000 $\mu$m, and more preferably from 20 to 1000 $\mu$m, and the thickness of the adhesive resin layer is usually from 0.5 to 250 $\mu$m, preferably from 1 to 150 $\mu$m, and more preferably from 3 to 100 $\mu$m.

Furthermore, the ratio of the thickness of the present resin composition layer (4) to the thickness of the substrate resin layer ((the present resin composition layer (4))/(substrate resin layer)) in the present multilayer structure (4) is usually from 1/99 to 50/50, preferably from 5/95 to 45/55, and more preferably from 10/90 to 40/60, with the proviso that, when at least one type of layer has a plurality of layers, the ratio is based on the thickness of the thickest corresponding layer. The thickness ratio of the present resin composition layer (4) to the adhesive resin layer (the present resin composition layer (4)/the adhesive resin layer) in the present multilayer structure (4) is usually from 10/90 to 99/1, preferably from 20/80 to 95/5, and more preferably from 50/50 to 90/10, with the proviso that, when at least one type of layer has a plurality of layers, the ratio is based on the thickness of the thickest corresponding layer.

It is also possible to produce a cup- or tray-shaped molded body or food package using the present multilayer structure (4). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-shaped multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the produced laminate may be subjected to processes such as heat treatment, cooling treatment, rolling, printing, dry lamination, solution or melt coating, bag-making, deep drawing, box processing, tube processing, and splitting.

Examples

Hereinafter, the present disclosure will be more specifically described with reference to examples, but as long as a departure from the gist of the present disclosure does not occur, the present disclosure is not limited to the examples below. In the examples, "parts" and "%" are based on mass.

First Aspect

Prior to the examples, the following components were prepared.

- Ethylene-modified PVA resin: pellets of ethylene-modified PVA resins having an ethylene structural unit content of 4 mol%, a melting temperature of 213°C, and a degree of saponification of 98 mol%
- Unmodified PVA resin: pellets of PVA resins having an ethylene structural unit content of 0 mol%, a melting temperature of 227°C, and a degree of saponification of 99 mol%
- Titanium compound: rutile-type titanium(IV) oxide having an average particle size of 5 $\mu$m or less (available from FUJIFILM Wako Pure Chemical Corporation)
- Alkaline earth metal compound (A): magnesium chloride hexahydrate (available from FUJIFILM Wako Pure Chemical Corporation)

<Example I-1>

The pellets of the ethylene-modified PVA resins were dry-blended with the magnesium chloride hexahydrate in an amount of 0.1 ppm as a content in terms of metal relative to the mass of the resin composition and the titanium oxide in an amount of 0.1 ppm as a content in terms of metal relative to the mass of the resin composition, to prepare a mixture. Then, the mixture was fed to a twin-screw extruder (20 mmφ) having a die with two holes and extruded under the following extrusion conditions. The discharged strand was cooled by air cooling and solidified. Next, the solidified strand was cut by a pelletizer to produce pellets of a resin composition.

Extrusion Condition

Set temperature (°C) of extruder: C1/C2/C3/C4/C5/C6
= 200/210/225/225/225/225

<Example I-2>

Pellets of a resin composition were produced in the same manner as in Example I-1, except that the content of the titanium oxide in terms of metal was changed to 1.0 ppm relative to the mass of the resin composition in Example I-1.

<Comparative Example I-1>

Pellets of a resin composition were produced in the same manner as in Example I-1, except that no titanium oxide was used in Example I-1.

<Comparative Example I-2>

Pellets of a resin composition were produced in the same manner as in Example I-1, except that the content of the titanium oxide in terms of metal was changed to 3.0 ppm relative to the mass of the resin composition in Example I-1.

<Comparative Example I-3>

Pellets of a resin composition were produced in the same manner as in Example I-2, except that no magnesium chloride hexahydrate was used in Example I-2.

<Comparative Example I-4>

Pellets of a resin composition were produced in the same manner as in Example I-1, except that an unmodified PVA resin was used instead of the ethylene-modified PVA resin in Example I-1.

The resulting resin composition pellets of Examples I-1 and I-2 and Comparative Examples I-1 to I-4 were used to evaluate the thermal stability as follows. The results are shown in Table I-1 below.

Thermal Stability Evaluation

Five (5) mg of the resulting resin composition pellets were used to measure the 5% loss temperature (°C) using a thermogravimetric analyzer (Pyris 1 TGA, available from Perkin Elmer) in a nitrogen atmosphere under conditions of an air flow rate of 20 mL/min, a temperature raising rate of 10°C/min, and a temperature range of from 30 to 550°C. A higher 5% loss temperature (°C) means that the thermal stability of the resin composition is more excellent.

In addition, the evaluation was performed based on the following criteria.

A (good): 351°C or higher
B (average): 346°C or higher and lower than 351°C
C (poor): 341°C or higher and lower than 346°C
D (very poor): lower than 341°C

[Table I-1]

| | Type of PVA resin | Content of titanium compound in terms of metal (ppm) | Content of alkaline earth metal compound (A) in terms of metal (ppm) | 5% Loss temperature | |
|---|---|---|---|---|---|
| | | | | Measured value (°C) | Evaluation |
| Example I-1 | Ethylene-modified PVA resin | 0.1 | 0.1 | 351 | A |
| Example I-2 | Ethylene-modified PVA resin | 1.0 | 0.1 | 351 | A |
| Comparative Example I-1 | Ethylene-modified PVA resin | 0 | 0.1 | 348 | B |
| Comparative Example I-2 | Ethylene-modified PVA resin | 3.0 | 0.1 | 350 | B |
| Comparative Example I-3 | Ethylene-modified PVA resin | 1.0 | 0 | 342 | C |
| Comparative Example I-4 | Unmodified PVA resin | 0.1 | 0.1 | 284 | D |

As shown in Table I-1, the resin compositions of Examples I-1 and I-2, which contained specific amounts of the titanium compound and the alkaline earth metal compound (A) in the ethylene-modified PVA resin, had excellent thermal stability as compared with the resin composition of Comparative Example I-1, which did not contain the titanium compound, the resin composition of Comparative Example I-2, which contained the titanium compound in an amount larger than the specific range, the resin composition of Comparative Example I-3, which did not contain the alkaline earth metal compound (A), and the resin composition of Comparative Example I-4, which used the unmodified PVA resin.

Multilayer structures, molded bodies, and food packages each having a layer containing the resin composition of Example I-1 or I-2 also suppress thermal degradation and have excellent thermal stability.

Second Aspect

Prior to the examples, the following components were prepared.

- Ethylene-modified PVA resin: pellets of ethylene-modified PVA resins having an ethylene structural unit content of 4 mol%, a melting temperature of 213°C, and a degree of saponification of 98 mol%
- Unmodified PVA resin: pellets of PVA resins having an ethylene structural unit content of 0 mol%, a melting temperature of 227°C, and a degree of saponification of 99 mol%
- Titanium compound: rutile-type titanium(IV) oxide having an average particle size of 5 $\mu$m or less (available from FUJIFILM Wako Pure Chemical Corporation)
- Alkaline metal compound (B): sodium acetate (available from FUJIFILM Wako Pure Chemical Corporation)

<Example II-1>

The pellets of the ethylene-modified PVA resins were dry-blended with the sodium acetate in an amount of 10 ppm as a content in terms of metal relative to the mass of the resin composition and the titanium oxide in an amount of 0.1 ppm as a content in terms of metal relative to the mass of the resin composition, to prepare a mixture. Then, the mixture was fed to a twin-screw extruder (20 mm$\varphi$) having a die with two holes and extruded under the following extrusion conditions. The discharged strand was cooled by air cooling and solidified. Next, the solidified strand was cut by a pelletizer to produce pellets of a resin composition.

Extrusion Condition

Set temperature (°C) of extruder: C1/C2/C3/C4/C5/C6
= 200/210/225/225/225/225

<Example II-2>

Pellets of a resin composition were produced in the same manner as in Example II-1, except that the content of the titanium oxide in terms of metal was changed to 1 ppm relative to the mass of the resin composition in Example II-1.

<Example II-3>

Pellets of a resin composition were produced in the same manner as in Example II-1, except that the content of the sodium acetate in terms of metal was changed to 100 ppm relative to the mass of the resin composition in Example II-1.

<Comparative Example II-1>

Pellets of a resin composition were produced in the same manner as in Example II-3, except that no titanium oxide was used in Example II-3.

<Comparative Example II-2>

Pellets of a resin composition were produced in the same manner as in Example II-3, except that the content of the titanium oxide in terms of metal was changed to 10 ppm relative to the mass of the resin composition in Example II-3.

<Comparative Example II-3>

Pellets of a resin composition were produced in the same manner as in Example II-2, except that no sodium acetate was used in Example II-2.

<Comparative Example II-4>

Pellets of a resin composition were produced in the same manner as in Example II-2, except that an unmodified PVA resin was used instead of the ethylene-modified PVA resin in Example II-2.

The resulting resin composition pellets of Examples II-1 to II-3 and Comparative Examples II-1 to II-3 were used to measure the residual amount at 550°C as follows. The results are shown in Table II-1 below.

Residual Amount at 550°C

Five (5) mg of the resulting resin composition pellets were used to measure the residual amount (%) at 550°C using a thermogravimetric analyzer (Pyris 1 TGA, available from Perkin Elmer) in a nitrogen atmosphere under conditions of an air flow rate of 20 mL/min, a temperature raising rate of 10°C/min, and a temperature range of from 30 to 550°C. A larger residual amount (%) at 550°C means that the thermal stability of the resin composition is more excellent.

In addition, the evaluation was performed based on the following criteria. The results are shown in Table II-1 below.

A (good): 6.0% or more
B (average): 4.0% or more and less than 6.0%
C (poor): 2.0% or more and less than 4.0%
D (very poor): less than 2.0%

10% Loss Temperature

Five (5) mg of the resin composition pellets produced in Examples II-1 and II-2 were used to measure the 10% loss temperature (°C) using a thermogravimetric analyzer (Pyris 1 TGA, available from Perkin Elmer) in a nitrogen atmosphere under conditions of an air flow rate of 20 mL/min, a temperature raising rate of 10°C/min, and a temperature range of from 30 to 550°C. A higher 10% loss temperature (°C) means that the thermal stability of the resin composition is more excellent.

In addition, the evaluation was performed based on the following criteria. The results are shown in Table II-2 below.

AA (excellent): 356°C or higher
A (good): 351°C or higher and lower than 356°C

B (average): 347°C or higher and lower than 351°C

C (poor): lower than 347°C

Yellow Index (YI)

The pellets produced in Example II-1 and Comparative Example II-4 were filled in a cylinder having an inside diameter of 32 mm and a height of 30 mm and rubbed off, and then, the YI value of the resulting pulverized product was measured with a spectrophotometer (available from Nippon Denshoku Industries Co., Ltd.).

In addition, the evaluation was performed based on the following criteria. The results are shown in Table II-3 below.

A (good): 0 or more and less than 30

B (average): 30 or more and less than 60

C (poor): 60 or more and less than 90

D (very poor): 90 or more

[Table II-1]

| | Type of PVA resin | Content of titanium compound in terms of metal (ppm) | Content of alkaline metal compound (B) in terms of metal (ppm) | Residual amount at 550°C | |
| --- | --- | --- | --- | --- | --- |
| | | | | Measured value (%) | Evaluation |
| Example II-1 | Ethylene-modified PVA resin | 0.1 | 10 | 9.1 | A |
| Example II-2 | Ethylene-modified PVA resin | 1 | 10 | 11.4 | A |
| Example II-3 | Ethylene-modified PVA resin | 0.1 | 100 | 6.3 | A |
| Comparative Example II-1 | Ethylene-modified PVA resin | 0 | 100 | 4.3 | B |
| Comparative Example II-2 | Ethylene-modified PVA resin | 10 | 100 | 3.9 | C |
| Comparative Example II-3 | Ethylene-modified PVA resin | 1 | 0 | 2.2 | C |

[Table II-2]

| | Type of PVA resin | Content of titanium compound in terms of metal (ppm) | Content of alkaline metal compound (B) in terms of metal (ppm) | 10% Loss temperature | |
| --- | --- | --- | --- | --- | --- |
| | | | | Measured value (°C) | Evaluation |
| Example II-1 | Ethylene-modified PVA resin | 0.1 | 10 | 356.01 | AA |
| Example II-2 | Ethylene-modified PVA resin | 1 | 10 | 355.58 | A |

[Table II-3]

| | Type of PVA resin | Content of titanium compound in terms of metal (ppm) | Content of alkaline metal compound (B) in terms of metal (ppm) | YI | |
|---|---|---|---|---|---|
| | | | | Measured value | Evaluation |
| Example II-1 | Ethylene-modified PVA resin | 0.1 | 10 | 22 | A |
| Comparative Example II-4 | Unmodified PVA resin | 1 | 10 | 94 | D |

As shown in Tables II-1 to II-3, the resin compositions of Examples II-1 to II-3, which contained the alkaline metal compound (B) and a specific amount of the titanium compound in the ethylene-modified PVA resin, had excellent thermal stability as compared with the resin composition of Comparative Example II-1, which did not contain the titanium compound, the resin composition of Comparative Example II-2, which contained the titanium compound in an amount larger than the specific range, the resin composition of Comparative Example II-3, which did not contain the alkaline metal compound (B), and the resin composition of Comparative Example II-4, which used the unmodified PVA resin.

Multilayer structures including layers containing the resin compositions of Examples II-1 to II-3 also have excellent thermal stability.

Third Aspect

Prior to the examples, the following components were prepared.

- Ethylene-modified PVA resin: pellets of ethylene-modified PVA resins having an ethylene structural unit content of 4 mol%, a melting temperature of 213°C, and a degree of saponification of 98 mol%
- Titanium compound: rutile-type titanium(IV) oxide having an average particle size of 5 $\mu$m or less (available from FUJIFILM Wako Pure Chemical Corporation)
- Sorbic acid (C): sorbic acid (available from FUJIFILM Wako Pure Chemical Corporation)

<Example III-1>

The pellets of the ethylene-modified PVA resins were dry-blended with the sorbic acid in an amount of 50 ppm relative to the mass of the resin composition and the titanium oxide in an amount of 0.1 ppm as a content in terms of metal relative to the mass of the resin composition, to prepare a mixture. Then, the mixture was fed to a twin-screw extruder (20 mm$\varphi$) having a die with two holes and extruded under the following extrusion conditions. The discharged strand was cooled by air cooling and solidified. Next, the solidified strand was cut by a pelletizer to produce pellets of a resin composition.

Extrusion Condition

Set temperature (°C) of extruder: C1/C2/C3/C4/C5/C6 = 200/210/225/225/225/225

<Example III-2>

Pellets of a resin composition were produced in the same manner as in Example III-1, except that the content of the titanium oxide in terms of metal was changed to 1 ppm relative to the mass of the resin composition in Example III-1.

<Comparative Example III-1>

Pellets of a resin composition were produced in the same manner as in Example III-1, except that no titanium oxide was used in Example III-1.

<Comparative Example III-2>

Pellets of a resin composition were produced in the same manner as in Example III-1, except that the content of the titanium oxide in terms of metal was changed to 10 ppm relative to the mass of the resin composition in Example III-1.

<Comparative Example III-3>

Pellets of a resin composition were produced in the same manner as in Example III-2, except that no sorbic acid was used in Example III-2.

The resulting resin composition pellets of Examples III-1 and III-2 and Comparative Examples III-1 to III-3 were used to measure the 40% loss temperature as follows. The results are shown in Table III-1 below.

40% Loss Temperature

Five (5) mg of the resulting resin composition pellets were used to measure the weight change for comparison of the 40% loss temperatures using a thermogravimetric analyzer (Pyris 1 TGA, available from Perkin Elmer) in a nitrogen atmosphere under conditions of an air flow rate of 20 mL/min, a temperature raising rate of 10°C/min, and a temperature range of from 30 to 550°C. A higher 40% loss temperature means that the thermal stability of the resin composition is more excellent.

In addition, the evaluation was performed based on the following criteria.

A (good): 393°C or higher
B (average): 390°C or higher and lower than 393°C
C (poor): lower than 390°C

5% Loss Temperature

Five (5) mg of the resin composition pellets produced in Examples III-1 and III-2 were used to measure the 5% loss temperature (°C) using a thermogravimetric analyzer (Pyris 1 TGA, available from Perkin Elmer) in a nitrogen atmosphere under conditions of an air flow rate of 20 mL/min, a temperature raising rate of 10°C/min, and a temperature range of from 30 to 550°C. A higher 5% loss temperature (°C) means that the thermal stability of the resin composition is more excellent.

In addition, the evaluation was performed based on the following criteria. The results are shown in Table III-2 below.

AA (excellent): 341°C or higher

A (good): 336°C or higher and lower than 341°C

B (average): lower than 336°C

[Table III-1]

| | Type of PVA resin | Content of titanium compound in terms of metal (ppm) | Content of sorbic acid (C) (ppm) | 40% Loss temperature | |
|---|---|---|---|---|---|
| | | | | Measured value (°C) | Evaluation |
| Example III-1 | Ethylene-modified PVA resin | 0.1 | 50 | 394 | A |
| Example III-2 | Ethylene-modified PVA resin | 1 | 50 | 395 | A |
| Comparative Example III-1 | Ethylene-modified PVA resin | 0 | 50 | 387 | C |
| Comparative Example III-2 | Ethylene-modified PVA resin | 10 | 50 | 389 | C |
| Comparative Example III-3 | Ethylene-modified PVA resin | 1 | 0 | 388 | C |

[Table III-2]

| | Type of PVA resin | Content of titanium compound in terms of metal (ppm) | Content of sorbic acid (C) (ppm) | 5% Loss temperature | |
|---|---|---|---|---|---|
| | | | | Measured value (°C) | Evaluation |
| Example III-1 | Ethylene-modified PVA resin | 0.1 | 50 | 351.91 | AA |
| Example III-2 | Ethylene-modified PVA resin | 1 | 50 | 337.72 | A |

As shown in Tables III-1 and III-2, the resin compositions of Examples III-1 and III-2, which contained the sorbic acid and a specific amount of the titanium compound in the ethylene-modified PVA resin, had excellent thermal stability as compared with the resin composition of Comparative Example III-1, which did not contain the titanium compound, the resin composition of Comparative Example III-2, which contained the titanium compound in an amount larger than the specific range, and the resin composition of Comparative Example III-3, which did not contain the sorbic acid.

Multilayer structures including layers containing the resin compositions of Examples III-1 and III-2 also have excellent thermal stability.

Fourth Aspect

Prior to the examples, the following components were prepared.

- Ethylene-modified PVA resin: pellets of ethylene-modified PVA resins having an ethylene structural unit content of 4 mol%, a melting temperature of 213°C, and a degree of saponification of 98 mol%
- Unmodified PVA resin: pellets of PVA resins having an ethylene structural unit content of 0 mol%, a melting temperature of 227°C, and a degree of saponification of 99 mol%
- Titanium compound: rutile-type titanium(IV) oxide having an average particle size of 5 $\mu$m or less (available from FUJIFILM Wako Pure Chemical Corporation)
- Acetic acid (D): acetic acid (available from FUJIFILM Wako Pure Chemical Corporation)

<Example IV-1>

The pellets of the ethylene-modified PVA resins were dry-blended with the acetic acid in an amount of 500 ppm relative to the mass of the resin composition and the titanium oxide in an amount of 0.1 ppm as a content in terms of metal relative to the mass of the resin composition, to prepare a mixture. Then, the mixture was fed to a twin-screw extruder (20 mm$\varphi$) having a die with two holes and extruded under the following extrusion conditions. The discharged strand was cooled by air cooling and solidified. Next, the solidified strand was cut by a pelletizer to produce pellets of a resin composition.

Extrusion Condition

Set temperature (°C) of extruder: C1/C2/C3/C4/C5/C6
= 200/210/225/225/225/225

<Example IV-2>

Pellets of a resin composition were produced in the same manner as in Example IV-1, except that the content of the titanium oxide in terms of metal was changed to 1 ppm relative to the mass of the resin composition in Example IV-1.

<Comparative Example IV-1>

Pellets of a resin composition were produced in the same manner as in Example IV-1, except that no titanium oxide was used in Example IV-1.

<Comparative Example IV-2>

Pellets of a resin composition were produced in the same manner as in Example IV-1, except that the content of the titanium oxide in terms of metal was changed to 10 ppm relative to the mass of the resin composition in Example IV-1.

<Comparative Example IV-3>

Pellets of a resin composition were produced in the same manner as in Example IV-2, except that no acetic acid was used in Example IV-2.

<Comparative Example IV-4>

Pellets of a resin composition were produced in the same manner as in Example IV-1, except that an unmodified PVA resin was used instead of the ethylene-modified PVA resin in Example IV-1.

The resulting resin composition pellets of Examples IV-1 and IV-2 and Comparative Examples IV-1 to IV-4 were used to measure the 5% loss temperature as follows. The results are shown in Table IV-1 below.

5% Loss Temperature

Five (5) mg of the resulting resin composition pellets were used to measure the 5% loss temperature (°C) using a thermogravimetric analyzer (Pyris 1 TGA, available from Perkin Elmer) in a nitrogen atmosphere under conditions of an air flow rate of 20 mL/min, a temperature raising rate of 10°C/min, and a temperature range of from 30 to 550°C. A higher 5% loss temperature (°C) means that the thermal stability is more excellent.

In addition, the evaluation was performed based on the following criteria.

A (good): 345°C or higher
B (average): 340°C or higher and lower than 345°C
C (poor): 335°C or higher and lower than 340°C
D (very poor): lower than 335°C

Residual Amount at 550°C

Five (5) mg of the resin composition pellets produced in Examples IV-1 and IV-2 were used to measure the residual amount (%) at 550°C using a thermogravimetric analyzer (Pyris 1 TGA, available from Perkin Elmer) in a nitrogen atmosphere under conditions of an air flow rate of 20 mL/min, a temperature raising rate of 10°C/min, and a temperature range of from 30 to 550°C. A larger residual amount (%) at 550°C means that the thermal stability of the resin composition is more excellent.

In addition, the evaluation was performed based on the following criteria. The evaluation is shown in Table IV-2.

AA (excellent): 4.0% or more

A (good): 2.0% or more and less than 4.0%

B (average): less than 2.0%

[Table IV-1]

| | Type of PVA resin | Content of titanium compound in terms of metal (ppm) | Content of acetic acid (D) (ppm) | 5% Loss temperature | |
|---|---|---|---|---|---|
| | | | | Measured value (°C) | Evaluation |
| Example IV-1 | Ethylene-modified PVA resin | 0.1 | 500 | 345 | A |
| Example IV-2 | Ethylene-modified PVA resin | 1 | 500 | 345 | A |
| Comparative Example IV-1 | Ethylene-modified PVA resin | 0 | 500 | 342 | B |
| Comparative Example IV-2 | Ethylene-modified PVA resin | 10 | 500 | 344 | B |
| Comparative Example IV-3 | Ethylene-modified PVA resin | 1 | 0 | 342 | B |
| Comparative Example IV-4 | Unmodified PVA resin | 0.1 | 500 | 283 | D |

[Table IV-2]

| | Type of PVA resin | Content of titanium compound in terms of metal (ppm) | Content of acetic acid (D) (ppm) | Residual amount at 550°C | |
|---|---|---|---|---|---|
| | | | | Measured value (%) | Evaluation |
| Example IV-1 | Ethylene-modified PVA resin | 0.1 | 500 | 6.7 | AA |
| Example IV-2 | Ethylene-modified PVA resin | 1 | 500 | 2.2 | A |

As shown in Tables IV-1 and IV-2, the resin compositions of Examples IV-1 and IV-2, which contained the acetic acid and a specific amount of the titanium compound, had excellent thermal stability as compared with the resin composition of Comparative Example IV-1, which did not contain the titanium compound, the resin composition of Comparative Example IV-2, which contained the titanium compound in an amount larger than the specific range, the resin composition of Comparative Example IV-3, which did not contain the acetic acid, and the resin composition of Comparative Example IV-4, which used the unmodified PVA resin.

Multilayer structures including layers containing the resin compositions of Examples IV-1 and IV-2 also have excellent thermal stability.

Specific embodiments of the present disclosure were described in the above examples, but the above examples are merely illustrative and are not to be construed as limiting. Various modifications apparent to those skilled in the art are intended to be within the scope of the present disclosure.

Industrial Applicability

The present resin composition has an increased thermal decomposition temperature at the time of melt-molding and is excellent in thermal stability. Thus, the present resin composition is useful as various packaging materials for various foods, seasonings such as mayonnaise and dressing, fermented foods such as miso, oil and/or fat foods such as salad oil, beverages, cosmetics, pharmaceuticals, and the like, as well as materials for molded bodies that package agrochemicals, detergents, additives for civil engineering, disinfectants, dyes, pigments, and the like.

**Claims**

1. A resin composition comprising:

   a polyvinyl alcohol resin;
   a titanium compound; and
   a compound (X),
   wherein the polyvinyl alcohol resin is an ethylene-modified polyvinyl alcohol resin containing from 1 to 19 mol% of an ethylene structural unit,
   wherein the compound (X) is at least one selected from the group consisting of an alkaline earth metal compound (A), an alkaline metal compound (B), sorbic acid (C), and acetic acid (D), and
   wherein a content of the titanium compound in terms of metal is from 0.0001 to 2 ppm relative to a mass of the resin composition.

2. The resin composition according to claim 1, wherein the compound (X) is an alkaline earth metal compound (A).

3. The resin composition according to claim 2, wherein a content of the alkaline earth metal compound (A) in terms of metal is from 0.0001 to 1 ppm relative to the mass of the resin composition.

4. The resin composition according to claim 2 or 3, wherein the alkaline earth metal compound (A) is a magnesium compound.

5. The resin composition according to any one of claims 1 to 4, wherein the compound (X) is an alkaline metal compound (B).

6. The resin composition according to claim 5, wherein a content of the alkaline metal compound (B) in terms of metal is from 0.0001 to 5000 ppm relative to the mass of the resin composition.

7. The resin composition according to claim 5 or 6, wherein the alkaline metal compound (B) is a sodium compound.

8. The resin composition according to one of claims 1 to 7, wherein the compound (X) is sorbic acid (C).

9. The resin composition according to claim 8, wherein a content of the sorbic acid (C) is from 0.005 to 100 ppm relative to the mass of the resin composition.

10. The resin composition according to one of claims 1 to 9, wherein the compound (X) is acetic acid (D).

11. The resin composition according to claim 10, wherein a content of the acetic acid (D) is from 10 to 10000 ppm relative to the mass of the resin composition.

12. The resin composition according to one of claims 1 to 11, wherein the content of the titanium compound in terms of metal is 0.0001 ppm or more and less than 1 ppm relative to the mass of the resin composition.

13. A molding material comprising the resin composition according to one of claims 1 to 12.

14. A multilayer structure comprising a layer containing the resin composition according to one of claims 1 to 12.

15. A molded body comprising the multilayer structure according to claim 14.

16. A food package comprising the multilayer structure according to claim 14.

17. A method for producing the resin composition according to one of claims 1 to 12, the method comprising:
melt-mixing a resin composition raw material containing the polyvinyl alcohol resin and the titanium compound.

18. A method for producing the multilayer structure according to claim 14, the method comprising:
melt-molding a layer containing the resin composition.

## INTERNATIONAL SEARCH REPORT

International application No.

**PCT/JP2024/033302**

### A. CLASSIFICATION OF SUBJECT MATTER

*C08L 29/04*(2006.01)i; *B32B 27/28*(2006.01)i; *C08K 3/11*(2018.01)i; *C08K 3/105*(2018.01)i; *C08K 5/09*(2006.01)i
FI: C08L29/04 A; B32B27/28 102; C08K3/105; C08K3/11; C08K5/09

According to International Patent Classification (IPC) or to both national classification and IPC

### B. FIELDS SEARCHED

Minimum documentation searched (classification system followed by classification symbols)

C08L29/04; B32B27/28; C08K3/11; C08K3/105; C08K5/09

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| Y | JP 2001-96529 A (KURARAY CO., LTD.) 10 April 2001 (2001-04-10)<br>claims 19, 21, 22, 24, paragraphs [0015], [0047]-[0048], [0054]-[0056], [0080]-[0081], [0093], examples 1-4, tables 1-4 | 1, 2, 4-18 |
| Y | JP 2002-370323 A (KURARAY CO., LTD.) 24 December 2002 (2002-12-24)<br>claims 1, 3, paragraphs [0004]-[0005], [0012], [0085], examples 1-5, tables 1, 4 | 1-18 |
| Y | JP 2000-263712 A (KURARAY CO., LTD.) 26 September 2000 (2000-09-26)<br>claims 1, 4, 5, paragraphs [0009], [0064], examples 1-8, table 1 | 1-18 |
| Y | JP 2019-163378 A (MITSUBISHI CHEMICAL CORPORATION) 26 September 2019 (2019-09-26)<br>claim 1, paragraphs [0070], [0083]-[0085], [0088], examples 2, 3, table 1 | 1-18 |
| Y | JP 9-71620 A (KURARAY CO., LTD.) 18 March 1997 (1997-03-18)<br>claim 6, paragraphs [0001], [0013], [0020], example 3, table 1 | 8,9 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 October 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/033302** |

| Patent document cited in search report | | | Publication date (day/month/year) | Patent family member(s) | Publication date (day/month/year) |
| --- | --- | --- | --- | --- | --- |
| JP | 2001-96529 | A | 10 April 2001 | (Family: none) | |
| JP | 2002-370323 | A | 24 December 2002 | US 2003/0031817 A1<br>claims 1, 3, paragraphs [0004]-[0005], [0012], [0064], examples 1-4, tables 1, 4 | |
| JP | 2000-263712 | A | 26 September 2000 | (Family: none) | |
| JP | 2019-163378 | A | 26 September 2019 | (Family: none) | |
| JP | 9-71620 | A | 18 March 1997 | (Family: none) | |

Form PCT/ISA/210 (patent family annex) (July 2022)

**REFERENCES CITED IN THE DESCRIPTION**

**Patent documents cited in the description**

- JP 2000309607 A
- JP H05222609 A
- WO 2013146533 A
- JP 2023077420 A